# EUROPEAN PATENT SPECIFICATION

(11) **EP 4 055 841 B1**
(45) Date of publication and mention of the grant of the patent: **21.08.2024**
(21) Application number: 20842292.3
(22) Date of filing: 02.12.2020
(51) Int. Cl.: H04W 4/02, H04W 4/48, B60N 2/005

(54) **SYSTEMS AND METHODS FOR MONITORING OR DETECTING VEHICLE SEAT LOCATION**
SYSTEME UND VERFAHREN ZUM ÜBERWACHEN ODER ERKENNEN EINER FAHRZEUGSITZPOSITION
SYSTÈMES ET PROCÉDÉS DE SURVEILLANCE OU DE DÉTECTION D'EMPLACEMENT DE SIÈGE DE VÉHICULE

(30) Priority: 04.12.2019 US 201962943503 P; 31.12.2019 US 201962955722 P
(43) Date of publication of application: 14.09.2022
(73) Proprietor: Marquardt GmbH, 78604 Rietheim-Weilheim (DE)
(72) Inventor: PANTELIS, Paul, Rochester Hills, Michigan 48309 (US); BURAKOU, Aliaksandr, Troy, Michigan 48098 (US); HEHN, Steven, Royal Oak, Michigan 48073 (US); KULESH, Victor, Oxford, Michigan 48371 (US); HOERR, Daniel, Rochester Hills, Michigan 48307 (US); FISCHER, Joerg, 78166 Donaueschingen (DE); PFEIFFER, Simon, 78606 Seitingen-Oberflacht (DE); RIESENBERG, Jens, 42369 Wuppertal (DE)
(74) Representative: Dummett Copp LLP
(86) International application number: PCT/IB2020/020076
(87) International publication number: WO 2021/111191

(56) References cited:
- WO-A1-2018/069172
- DE-B3- 102013 216 549
- US-A1- 2009 058 057

## Description

### Field of the Inventive Subject Matter

The present inventive subject matter is directed to systems and methods for monitoring or detecting the location(s) of one or more seats in a vehicle, detecting any of a variety of seat attributes for any vehicle seat (e.g., whether the vehicle seat is occupied, whether the seat belt for that vehicle seat is engaged, and/or other seat attributes), and conveying any or all of such information to one or more components of the vehicle. The present inventive subject matter is also directed to systems and methods (or components) that are configured to employ such information, optionally in combination with information received in other ways, in making conjectures relating to vehicle seats. The present inventive subject matter is also directed to vehicle seat systems, calculation elements, and other related elements.

### Background

There is an ongoing need for improvements in vehicle safety, ease of operation, efficiency, and functionality. Persons of skill in the art of automotive safety, for example, are familiar with the provisions in Regulation 16 of the Economic Commission for Europe (ECE 16) and in Federal Motor Vehicle Safety Standard 208 (FMVSS 208)(which regulates automotive occupant crash protection in the U.S.).

Prior art document WO 2018/069172 A1 discloses a solution to determine on which seat receptacle of a. vehicle a seat is engaged with, based on wireless signals.

### Brief Summary of the Inventive Subject Matter

Aspects of the invention are defined in the appended independent claims. Optional features are recited in the dependent claims. The following aspects and embodiments are illustrative only and are not to be construed as defining the claimed invention.

In some embodiments of the present inventive subject matter, there are provided wireless and independently powered detection systems that identify location and presence of seats (e.g., seats that are detachable, interchangeable, reversible, etc.), detect whether and when a seat is occupied by a person (as opposed to a random object), detect whether and when the seat belt is engaged with the buckle, and report any or all of such information to the vehicle. Embodiments according to the present inventive subject matter can be employed for multiple seats within a vehicle, and are capable of functioning throughout the life of the vehicle without being serviced.

The present invention provides innovative technological approaches and methods to locate vehicle seats and report information relating to vehicle seats.

In many vehicles (e.g., automobiles), there is at least one seat, and in many cases multiple seats, that are removable, interchangeable and/or reversible, and not easily connected to 12V vehicle supply (e.g., especially seats in the back of the vehicle). Systems in accordance with the present inventive subject matter that communicate wirelessly and that are independently powered provide advantageous properties in such situations.

In some aspects, methods and systems according to the present inventive subject matter can employ and/or interface with existing technology, such as passive entry passive start (PEPS) systems (e.g., including driver authentication, driver authorization and/or keyless entry) and other technologies, including technologies that have yet to emerge (including some that may emerge imminently).

In some embodiments, a central module is provided that can be integrated with a PEPS ECU that has external antenna drivers and an internal backchannel antenna and CAN communication capability.

In some embodiments, overall cost is reduced because many aspects can carry over from existing (and/or already installed) PEPS platforms. In some embodiments, the system can be integrated with existing systems on vehicles (e.g., PEPS systems), e.g., including using a LF (low frequency) antenna already on the vehicle.

The inventive subject matter may be more fully understood with reference to the accompanying drawings and the following detailed description.

Throughout the description it is used the term inventive subject matter for all the embodiments presented. However, those embodiments are not necessarily embraced by the subject-matter defined by the appended claims.

### Brief Description of the Drawing Figures

**Fig. 1** schematically depicts a first embodiment of a vehicle with a vehicle seat information detection system **10** in accordance with the present inventive subject matter.
**Fig. 2** schematically depicts a second embodiment of a vehicle with a vehicle seat information detection system **20** in accordance with the present inventive subject matter.
**Fig. 3** schematically depicts an antenna array **50** comprising a plurality of first seat system antennas **51**, suitable for use in some embodiments according to the present inventive subject matter.
**Fig. 4** schematically depicts a non-transitory computer-readable medium **52** in accordance with the present inventive subject matter.
**Fig. 5** schematically depicts a processor **53** in accordance with the present inventive subject matter.
**Fig. 6** depicts schematically a representative scenario in which an angle Φ is defined by an imaginary line extending from a vehicle wireless signal transmitter **62** to a seat system antenna **61,** and an imaginary vertical line extending downward from the vehicle wireless signal transmitter **62.**
**Fig. 7** depicts schematically a representative scenario in which an angle θ defines an angular location of a seat system antenna **71** relative to a vehicle wireless signal transmitter **72.**

### Detailed Description of the Inventive Subject Matter

The present inventive subject matter encompasses many combinations of elements and features. The expression "In some embodiments in accordance with the present inventive subject matter, which can include or not include, as suitable, any of the other features described herein," or the like, is used in the present specification to introduce elements and/or features of the present inventive subject matter that can be included or not included in any particular embodiment, i.e., elements and/or features that can be combined in any suitable way. In other words, the present inventive subject matter encompasses all combinations of elements and/or features that are introduced with the expression "In some embodiments in accordance with the present inventive subject matter, which can include or not include, as suitable, any of the other features described herein," or the like.

The expression "comprising" is used in accordance with its well known usage, and means that the item that "comprises" the recited elements (or that is "comprising" the recited elements) includes at least the recited elements, and can optionally include any additional elements. For example, where a first vehicle seat system is described as comprising a first seat, a first seat system antenna and a first seat system wireless signal transmitter, the vehicle seat system:
can have any additional component, e.g., a seat sensor, and/or
can have only one antenna (i.e., the first seat system antenna), or it can have two or more antennas (i.e., the first seat system antenna and one or more additional antennas), and similarly, the vehicle seat system can have only one wireless signal transmitter, or it can have two or more wireless signal transmitters.

The expression "engaged," as used herein, e.g., with regard to a vehicle seat system being engaged with a seat receptacle, or with regard to a seat belt being engaged with a seat belt buckle, means that (under normal operation) elements that are engaged do not move relative to one another by a substantial amount unless the elements are somehow disengaged (e.g., by pressing a release mechanism). Analogously, the expression "engageable" (e.g., in the expression "the first vehicle seat system selectively engageable with at least the first seat receptacle and the second seat receptacle") means that components are capable of being engaged (or becoming engaged)(e.g., the expression "the first vehicle seat system selectively engageable with at least the first seat receptacle and the second seat receptacle" means that the first vehicle seat system is capable of being engaged with the first seat receptacle or with the second seat receptacle, e.g., a seat system can be engaged with a first seat receptacle (e.g., third row left), and a seat system that is engaged with the first seat receptacle can be disengaged from the first seat receptacle and then engaged with a second seat receptacle (e.g., second row right). Persons of skill in the art are familiar with a wide variety of ways to configure seat systems and seat receptacles (and ways to configure seat belts and seat belt buckles) such that they can be engaged and disengaged.

The term "distance," as used herein, means actual distance, e.g., the actual distance between a vehicle wireless signal transmitter and a seat antenna.

The term "location," as used herein, means an actual location, e.g., a point represented on a three-dimensional coordinate system.

The term "position," as used herein, means the identity of a seat receptacle with which a seat is engaged. Thus, for example, a statement that "the first vehicle seat system is in the first position" means that the first vehicle seat system is engaged with a seat receptacle that is configured to hold a vehicle seat system in a location that correlates to such first position (i.e., a "first position" is a particular location).

In statements herein that refer to a vehicle and other components, expressions relating to location and/or position are defined relative to a vehicle, e.g., the fact that a seat system is in a vehicle that is moving does not mean that the seat system is changing its location or its position (relative to the vehicle). Since a location is a specific point, in order to specify a location for an object that occupies more than one point, a specific point on the object can be used as the location of the object. Thus, the location of an object (i.e., a three-dimensional structure or combination of structures), e.g., a vehicle seat system, can be expressed in terms of the precise location of a particular point on the object (e.g., a seat receptacle is expressed as being in a fourth location even though different regions of the seat receptacle are in different precise locations). The respective locations of multiple analogous objects (e.g., first and second vehicle seat systems) can be expressed in terms of the precise respective locations of particular analogous points on the objects, e.g., the locations for each of first and second vehicle seat systems that are substantially identical can be expressed in terms of substantially identical locations on the respective vehicle seat systems; the locations for each of first and second vehicle seat systems that are not substantially identical can be expressed in terms of respective locations on the analogous locations (e.g., for each of the respective vehicle seat systems, the center of a bracket that engages with a seat receptacle).

The expression "attached," as used herein (e.g., in the expression "the first vehicle wireless signal transmitter attached to a vehicle at a first location"), means that the first structure, element or component that is "attached to" a second structure, element or component cannot be removed from the second structure (in normal usage) without removing an attachment element (e.g., a screw, a bolt, a weld, etc.)).

The expression "signal" is used herein to refer to any signal that propagates as a wave (e.g., a transverse wave, a longitudinal wave or a surface wave), e.g., an electromagnetic wave, a sound wave, a seismic wave, etc. Typically, the expression "signal" is used herein to refer to an electromagnetic wave.

A statement herein that a calculation element is configured to conjecture as to which of a plurality of seat receptacles a vehicle seat system is engaged (e.g., in the expression "the calculation element configured to conjecture as to which of the at least first and second seat receptacles the first vehicle seat system is engaged") means that if the vehicle seat system is engaged with a seat receptacle, the calculation element will be able to determine with which seat receptacle the vehicle seat system is engaged (i.e., the expression "the calculation element configured to conjecture as to which of the at least first and second seat receptacles the first vehicle seat system is engaged" does not imply that the first vehicle seat system is necessarily engaged with any seat receptacle).

The expression "location adjustment," as used herein (e.g., in the expression "in said conjecturing as to a distance between the first vehicle wireless signal transmitter and the first seat system antenna, a location adjustment is made based on a selection of said at least one attribute"), means that an adjustment is made to account for any attribute of the seat that causes the seat antenna to be in a location that differs from where the seat antenna would be if the selections for each attribute corresponded to a default combination of attribute selections (e.g., if the seat is facing forward, not folded, not tumbled and not reclined). Accordingly, a "location adjustment" can be 0 in every dimension (i.e., with the seat in its default combination of attribute selections).

The expression "vehicle," as used herein, means anything capable of transporting people or goods, e.g., an automobile, a truck, a cart, a boat, etc. A vehicle can be self-moving (such as an automobile or heavy equipment (e.g., a front-loader)) or non-self-moving (such as a cart or a trailer).

Many systems and components described herein are or comprise one or more antenna(s) (e.g., seat system antennas and data-receiving antennas). Persons of skill in the art are familiar with a variety of antennas, and any suitable antenna or antennas can be used. The expression "antenna" is used herein to refer to any device that is capable of receiving wireless signals, a variety of such antennas being well known to persons of skill in the art. An antenna can be capable only of receiving wireless signals and incapable of transmitting wireless signals, or it can be capable of both receiving and transmitting wireless signals (i.e., it can be a transceiver). Accordingly, an "antenna" can refer to [1] an antenna, [2] a transceiver, [3] a portion of a device that is an antenna, or [4] a portion of a device that is a transceiver.

Many systems and components described herein are or comprise one or more wireless signal transmitter(s) (e.g., vehicle wireless signal transmitters and seat system wireless signal transmitters). The expression "wireless signal transmitter" is used herein to refer to any device that is capable of transmitting wireless signals, a variety of such transmitters being well known to persons of skill in the art. A wireless signal transmitter can be capable of transmitting wireless signals and incapable of receiving wireless signals, or it can be capable of both transmitting and receiving wireless signals (i.e., it can be a transceiver). The expression "transmitter" is used herein to refer to devices that are capable of transmitting wireless signals. The expression "transceiver" is used herein to refer to devices that are capable of transmitting wireless signals and receiving wireless signals. Accordingly, a "wireless signal transmitter" can refer to [1] a transmitter, [2] a transceiver, [3] a portion of a device that is a transmitter, or [4] a portion of a device that is a transceiver.

Persons of skill are familiar with a variety of forms of wireless signals, and systems, components and methods in accordance with the present inventive subject matter can use any suitable wireless signals. For example, well known types of wireless signals include any electromagnetic signals, e.g., RF (radio frequency), LF (low frequency), UWB (ultra-wide band), BLE (Bluetooth^{®} Low Energy), etc.

Signals that are used to determine distance between components (e.g., between a vehicle wireless signal transmitter and a seat system antenna can (and typically do) contain information that identifies the transmitter from which the signal was emitted (whereby the receiving component can correlate any information or conjectures to such transmitter).

Signals that are used to convey information about a component or about a relationship between components (e.g., a signal that includes a conjecture about a distance between a vehicle wireless signal transmitter and a seat system antenna) can include (and typically do include) information that identifies the transmitter from which the signal was emitted (and that identifies any other component to which the information relates).

As described herein, some aspects of the present inventive subject matter are directed to systems and components that comprise at least one processor, e.g., one or more CPU(s), ECU(s), one or more microprocessor(s), etc. In any such instance, a single processor can carry out calculations, conjectures and/or any other functions, or two or more processors can together carry out calculations, conjectures and/or any other functions, e.g., a first processor can carry out part of an operation and a second processor can carry out another part of an operation (e.g., for each of first, second and third seat systems, a respective microprocessor can conjecture as to the distance between an antenna in that seat system and a first vehicle wireless signal transmitter (e.g., based on a signal-reception-strength value for a signal sent from the first vehicle wireless signal transmitter to that seat system), and the microprocessors can each send to a vehicle ECU respective signals containing information as to those respective conjectures, and the vehicle ECU can perform multilateration to conjecture as to the location of the seat system based on the respective distances).

Processors used in accordance with the present inventive subject matter can be any suitable processor, e.g., a CPU, an ECU, a microprocessor, etc. Any such processor can comprise one or more processing components. Functions performed by a "processor" can be performed by a single processor, or can be distributed among two or more processors, as is well known by persons of skill in the art.

Some systems in accordance with the present inventive subject matter comprise a body control module (BCM). Persons of skill in the art are familiar with BCMs, and any suitable BCM (or BCMs) can be employed.

Any system or component described herein can comprise multiple sub-systems or sub-components, which can communicate with each other in any way (e.g., wirelessly, via one or more conductive elements (e.g., via one or more wires, traces, buses, etc.)).

Any two components in a system described herein can communicate with each other in any way (unless specified otherwise, e.g., by specifying that they communicate wirelessly, such as specifying that a vehicle wireless signal transmitter communicates wirelessly with a seat system antenna, i.e., the vehicle wireless signal transmitter sends wireless signals that are received by a seat system antenna). For example, in a system that comprises an ECU and a BCM, the ECU and the BCM can communicate via a bus, such as a CAN FD bus (persons of skill in the art are familiar with CAN FD buses).

The expression "calculation element," as used herein, can refer to a single processor, part of a single processor, two or more processors, or respective parts or entireties of two or more processors. A calculation performed by a calculation element can all be performed in a single processor or parts of the calculation can be performed by respective different processors.

A "seat receptacle," as used herein, can be any structure that is capable of suitably holding a vehicle seat system in place within a vehicle. Persons of skill in the art are familiar with a wide variety of seat receptacles, and any of such receptacles can be employed in the present inventive subject matter. Different seat receptacles can be employed in a single vehicle. In many embodiments, two or more seat systems are engageable with any of two or more seat receptacles (i.e., the seat systems can be moved around the vehicle), including situations where the seat receptacles are not all identical and/or the seat systems are not all identical. Seat receptacles can be attached to a vehicle in any way, e.g., a seat receptacle can be bolted (or riveted, or welded, or screwed, etc.) to the vehicle, or a one-piece unitary structure can comprise the vehicle (or a part of the vehicle) and one or more seat receptacle(s).

As indicated above, a "vehicle seat system," as used herein, comprises a seat and can comprise other components, e.g., a seat system antenna, a seat system wireless signal transmitter (as indicated above, a transceiver can comprise both a seat system antenna and a seat system wireless signal transmitter), one or more sensors, a storage device, etc. A seat can be any structure suitable for a passenger to sit on, e.g., in the shape of a chair, a bench, a stool, etc. In some embodiments, a seat comprises a seat back and a seat bottom (i.e., in a typical sitting position, a passenger's buttocks is in direct contact with the seat bottom, and the passenger's back (at least his or her lower back) is in contact with the seat back. A seat can, if desired, be configured such that it has any one or more adjustment capability or capabilities, e.g., it can optionally be capable of being swiveled, folded, tumbled, raised, lowered, tilted, reclined, etc.

The expression "seat attribute" (or "attribute"), as used herein, refers to any characteristic of a seat. The expression "changeable seat attribute," as used herein, refers to any feature of a seat that is changeable among at least two "selections" for that particular attribute. Any particular seat can have any number of changeable seat attributes, e.g., a seat can have any one or more of the following changeable seat attributes:
Position - the identity of a seat receptacle with which the seat is engaged. If position is a changeable seat attribute for a particular seat, the seat is selectively engageable with at least two different seat receptacles of a vehicle, i.e., the seat can be engaged with a particular seat receptacle, then disengaged from that seat receptacle, and then engaged with a different seat receptacle (e.g., in a first seat receptacle position selection, the seat is engaged with a first seat receptacle; in a second seat receptacle position selection, the seat is engaged with a second seat receptacle, etc.).
Orientation - the direction in which the seat is facing. If orientation is a changeable seat attribute for a particular seat, the direction toward which that seat faces can be changed, e.g., the seat is reversible, so that it can be in a forward-facing selection or a rearward-facing selection, or the seat is rotatable about a vertical axis among any number of directional orientations, e.g., forward-facing, rotated clockwise 90 degrees from forward-facing, rotated 180 degrees from forward-facing (i.e., rearward-facing), rotated clockwise 270 degrees from forward-facing, etc. (e.g., in a forward-facing orientation selection, the seat is facing forward; in a 90 degrees rotated orientation selection, the seat is facing a direction that is 90 degrees clockwise from the forward-facing orientation; in a rearward-facing orientation selection, the seat is facing a direction that is 180 degrees clockwise from the forward-facing orientation; in a 270 degrees rotated orientation selection, the seat is facing a direction that is 270 degrees clockwise from the forward-facing orientation).
Recline - the seat is reclinable. If recline is a changeable seat attribute for a particular seat, the seat is capable of being in either of a non-reclined selection or a reclined selection (and/or the seat can have more than two different recline selections, e.g., a non-reclined (upright) selection, a first reclined selection, a second reclined selection, a third reclined selection, a fourth reclined selection, a fifth reclined selection, a sixth reclined selection, etc.), e.g., in moving from the non-reclined selection to the first reclined selection, the seat back is rotated (e.g., relative to a horizontal axis perpendicular to the direction the seat is facing) such that the angle defined by the seat back and the seat bottom increases by 8 degrees (and by a respective additional quantity of degrees in moving to each of the other reclined positions in sequence, e.g., 10 more degrees in moving from the first inclined selection to the second inclined selection, 15 more degrees in moving from the second inclined selection to the third inclined selection, 15 more degrees in moving from the third inclined selection to the fourth inclined selection, 15 more degrees in moving from the fourth inclined selection to the fifth inclined selection, and 15 more degrees in moving from the fifth inclined selection to the sixth inclined selection.
Fold status - the seat is foldable. If fold status is a changeable seat attribute for a particular seat, the seat is capable of being in either of a folded status selection or in a non-folded status selection (and/or the seat can have more than two different fold position selections, e.g., a non-folded status selection, a first folded status selection and a second folded status selection, etc.), e.g., in one example of a folded status selection, the seat back is folded forward such that it rests on the seat bottom part of the seat, and in a non-folded status selection, the seat back is upright (i.e., the position, or one of a number of possible positions, in which a passenger would sit on the seat).
Tumble status - the seat can be tumbled (e.g., after being folded, the folded seat can be rotated relative to a horizontal axis, e.g., a horizontal left-right axis (i.e., an axis that is parallel to one of the vehicle axles)). If tumble status is a changeable seat attribute for a particular seat, the seat is capable of being in either of a tumbled status selection or in a non-tumbled status selection (and/or the seat can have more than two different tumble status selections, e.g., a non-tumbled status selection, a first tumbled status selection and a second tumbled status selection, etc.).
Any other attribute(s) - any other attribute that is changeable. If any other attribute is a changeable seat attribute for a seat, the seat is capable of being in any of at least two selections with regard to that attribute, i.e., the attributes specifically listed herein are not exclusive; there are many other attributes for which there might be a desire to provide multiple selections (e.g., providing the ability for the front of the seat bottom to be pivoted upward, lumbar support selections, seat heating selections, etc.)

Different seats in a vehicle can have different respective combinations of attributes that are changeable, i.e., a first seat in a vehicle might be changeable with regard to a first group of changeable seat attributes, while a second seat in the vehicle is changeable with regard to a second group of changeable seat attributes (different from the first group of changeable seat attributes), e.g., the first seat has multiple selections for its position, multiple selections for its orientation, multiple selections for its recline, multiple selections for its fold status and multiple selections for its tumble status, while the second seat has multiple selections for its position, multiple selections for its orientation, and multiple selections for its recline, but does not have multiple selections for its fold status or for its tumble status. If a particular seat does not fold, then "fold status" is not a changeable seat attribute for that seat; if a particular seat does not tumble, then "tumble status" is not a changeable seat attribute for that seat.

Some embodiments comprise one or more signal-reception-strength detector(s). Persons of skill in the art are familiar with a variety of signal-reception-strength detectors, and any such signal-reception-strength detectors can be employed. Signal-reception-strength detectors are configured to detect a strength with which a wireless signal emitted by a wireless signal transmitter is received by an antenna. For example, as is well known by persons of skill in the art, signal-reception-strength values (e.g., RSSI) for RF signals are on a negative scale, with zero dBm being the highest likely RSSI power. For actual implementation, in some embodiments, signal-reception-strength values are scaled to positive numbers.

As indicated herein, seat systems can comprise any of a variety of sensors. Representative examples of such sensors include (and are not limited to):
seat occupancy sensors (which are configured to sense whether a *person* is in the seat);
seat belt sensors (which sense whether a seat belt for the seat is engaged with a seat belt buckle for the seat);
seat orientation sensors (which sense, e.g., the angular orientation of the seat, e.g., the direction that the seat is facing);
seat fold status sensors (which sense whether the seat is folded, and/or a degree (among two or more folding options) to which the seat is folded);
seat tumble status sensors (which sense whether the seat is tumbled, and/or a degree (among two or more tumble options) to which the seat is tumbled);
seat recline sensors (which sense whether the seat is reclined, and/or a degree to which the seat is reclined); and
seat receptacle-engagement sensors (which sense whether the seat is engaged with any seat receptacle).

A seat receptacle can optionally comprise a seat-engagement sensor which can sense whether any seat system is engaged with the seat receptacle (and optionally in addition, the seat receptacle, the seat-engagement sensor or some other component can transmit information (wirelessly or via conductive elements, such as a wire) to one or more other component as to whether the seat-engagement sensor detects that a seat is engaged with the seat receptacle).

As noted above, in accordance with a first aspect of the present inventive subject matter, there is provided a vehicle seat information detection system, comprising:
at least a first vehicle wireless signal transmitter, a second vehicle wireless signal transmitter and a third vehicle wireless signal transmitter;
at least first and second seat receptacles;
at least first and second vehicle seat systems; and
a calculation element,
the first vehicle wireless signal transmitter attached to a vehicle at a first location,
the second vehicle wireless signal transmitter attached to the vehicle at a second location,
the third vehicle wireless signal transmitter attached to the vehicle at a third location,
the first seat receptacle attached to the vehicle at a fourth location,
the second seat receptacle attached to the vehicle at a fifth location,
the first vehicle seat system comprising a first seat, a first seat system antenna and a first seat system wireless signal transmitter,
the second vehicle seat system comprising a second seat, a second seat system antenna and a second seat system wireless signal transmitter,
the first vehicle seat system selectively engageable with at least the first seat receptacle and the second seat receptacle,
the second vehicle seat system selectively engageable with at least the first seat receptacle and the second seat receptacle,
the calculation element configured to conjecture as to which of the at least first and second seat receptacles the first vehicle seat system is engaged, based on at least conjectures as to:
   a distance between the first vehicle wireless signal transmitter and the first seat system antenna, said conjecture as to the distance between the first vehicle wireless signal transmitter and the first seat system antenna being based on at least one wireless signal sent from the first vehicle wireless signal transmitter and received by the first seat system antenna,
   a distance between the second vehicle wireless signal transmitter and the first seat system antenna, said conjecture as to the distance between the second vehicle wireless signal transmitter and the first seat system antenna being based on at least one wireless signal sent from the second vehicle wireless signal transmitter and received by the first seat system antenna, and
   a distance between the third vehicle wireless signal transmitter and the first seat system antenna, said conjecture as to the distance between the third vehicle wireless signal transmitter and the first seat system antenna being based on at least one wireless signal sent from the third vehicle wireless signal transmitter and received by the first seat system antenna,
the calculation element configured to conjecture as to which of the at least first and second seat receptacles the second vehicle seat system is engaged, based on at least conjectures as to:
   a distance between the first vehicle wireless signal transmitter and the second seat system antenna, said conjecture as to the distance between the first vehicle wireless signal transmitter and the second seat system antenna being based on at least one wireless signal sent from the first vehicle wireless signal transmitter and received by the second seat system antenna,
   a distance between the second vehicle wireless signal transmitter and the second seat system antenna, said conjecture as to the distance between the second vehicle wireless signal transmitter and the second seat system antenna being based on at least one wireless signal sent from the second vehicle wireless signal transmitter and received by the second seat system antenna, and
   a distance between the third vehicle wireless signal transmitter and the second seat system antenna, said conjecture as to the distance between the third vehicle wireless signal transmitter and the second seat system antenna being based on at least one wireless signal sent from the third vehicle wireless signal transmitter and received by the second seat system antenna.

In some embodiments according to the first aspect of the present inventive subject matter, which can include or not include, as suitable, any of the other features described herein:
the first vehicle seat system further comprises at least a first signal-reception-strength detector,
said conjecture as to the distance between the first vehicle wireless signal transmitter and the first seat system antenna is based on a signal-reception-strength value, detected by the first signal-reception-strength detector, of at least one wireless signal emitted from the first vehicle wireless signal transmitter and received by the first seat system antenna,
the second vehicle seat system further comprises at least a second signal-reception-strength detector, and
said conjecture as to the distance between the first vehicle wireless signal transmitter and the second seat system antenna is based on a signal-reception-strength value, detected by the second signal-reception-strength detector, of at least one wireless signal emitted from the first vehicle wireless signal transmitter and received by the second seat system antenna.

In some embodiments according to the first aspect of the present inventive subject matter, which can include or not include, as suitable, any of the other features described herein:
a first transceiver comprises the first seat system antenna and the first seat system wireless signal transmitter,
a second transceiver comprises the second seat system antenna and the second seat system wireless signal transmitter, and
a third transceiver comprises the third seat system antenna and the third seat system wireless signal transmitter.

In some embodiments according to the first aspect of the present inventive subject matter, which can include or not include, as suitable, any of the other features described herein:
the vehicle seat information detection system comprises a first processor, and
the first processor comprises the calculation element.

In some embodiments according to the first aspect of the present inventive subject matter, which can include or not include, as suitable, any of the other features described herein:
the vehicle seat information detection system comprises at least a first data-receiving antenna, and
the first data-receiving antenna is configured to receive at least: (1) wireless signals emitted from the first seat system wireless signal transmitter, (2) wireless signals emitted from the second seat system wireless signal transmitter, and (3) wireless signals emitted from the third seat system wireless signal transmitter.

In some embodiments according to the first aspect of the present inventive subject matter, which can include or not include, as suitable, any of the other features described herein:
the vehicle seat information detection system comprises an ECU and a BCM,
the first data-receiving antenna communicates with the ECU,
the ECU comprises the calculation element, and
the ECU communicates with the BCM via a bus.

In some of such embodiments, the bus is a CAN FD bus (the expression "In some of such embodiments," as used herein, refers to additional features in some embodiments corresponding to the immediately preceding reference to "In some embodiments according to" a particular aspect of the present inventive subject matter, i.e., the present sentence indicates that some embodiments according to the preceding sentence have the features described in the present sentence).

In some embodiments according to the first aspect of the present inventive subject matter, which can include or not include, as suitable, any of the other features described herein:
the first vehicle seat system further comprises at least a first energy source, and
the second vehicle seat system further comprises at least a second energy source.

In some of such embodiments:
the first energy source comprises at least a first battery, and the second energy source comprises at least a second battery, or
the first energy source comprises at least a first super capacitor, and the second energy source comprises at least a second super capacitor.

In some embodiments according to the first aspect of the present inventive subject matter, which can include or not include, as suitable, any of the other features described herein:
the conjecture by the calculation element as to which of the at least first and second seat receptacles the first vehicle seat system is engaged, is based further on at least one attribute of the first vehicle seat system; and
the conjecture by the calculation element as to which of the at least first and second seat receptacles the second vehicle seat system is engaged, is based further on at least one attribute of the second vehicle seat system.

In some embodiments according to the first aspect of the present inventive subject matter, which can include or not include, as suitable, any of the other features described herein, the first vehicle seat system comprises at least a first sensor. In some of such embodiments, the at least a first sensor comprises at least one sensor selected from among:
a seat occupancy sensor,
a seat belt sensor,
a seat orientation sensor,
a seat fold status sensor,
a seat tumble status sensor,
a recline sensor, and
a seat receptacle-engagement sensor.

In some embodiments according to the first aspect of the present inventive subject matter, which can include or not include, as suitable, any of the other features described herein:
the first vehicle seat system comprises at least a first sensor, and
the second vehicle seat system comprises at least a second sensor.

In some of such embodiments:
the at least a first sensor comprises at least one sensor selected from among:
   a seat occupancy sensor,
   a seat belt sensor,
   a seat orientation sensor,
   a seat fold status sensor,
   a seat tumble status sensor,
   a recline sensor, and
   a seat receptacle-engagement sensor,
the at least a second sensor comprises at least one sensor selected from among:
   a seat occupancy sensor,
   a seat belt sensor,
   a seat orientation sensor,
   a seat fold status sensor,
   a seat tumble status sensor,
   a recline sensor, and
   a seat receptacle-engagement sensor,
and/or:
the first seat system wireless signal transmitter is configured to send data sensed by the at least a first sensor, and
the second seat system wireless signal transmitter is configured to send data sensed by the at least a second sensor.

In some embodiments according to the first aspect of the present inventive subject matter, which can include or not include, as suitable, any of the other features described herein:
the first vehicle seat system further comprises a first storage device,
the first storage device comprises first storage device stored information,
the first storage device stored information comprises information that indicates the identity of the first vehicle seat system,
the second vehicle seat system further comprises a second storage device,
the second storage device comprises second storage device stored information, and
the second storage device stored information comprises information that indicates the identity of the second vehicle seat system.

In some embodiments according to the first aspect of the present inventive subject matter, which can include or not include, as suitable, any of the other features described herein:
the calculation element conjectures as to which of the at least first and second seat receptacles the first vehicle seat system is engaged by [1] performing 3-D true range multilateration using the conjectured distance between the first vehicle wireless signal transmitter and the first seat system antenna, the conjectured distance between the second vehicle wireless signal transmitter and the first seat system antenna, and the conjectured distance between the third vehicle wireless signal transmitter and the first seat system antenna, to conjecture as to the location of the first vehicle seat system, and [2] comparing the conjectured location of the first vehicle seat system to stored locations corresponding to the first vehicle seat system being engaged with the respective at least first and second seat receptacles, and
the calculation element conjectures as to which of the at least first and second seat receptacles the second vehicle seat system is engaged by [1] performing 3-D true range multilateration using the conjectured distance between the first vehicle wireless signal transmitter and the second seat system antenna, the conjectured distance between the second vehicle wireless signal transmitter and the second seat system antenna, and the conjectured distance between the third vehicle wireless signal transmitter and the second seat system antenna, to conjecture as to the location of the second vehicle seat system, and [2] comparing the conjectured location of the second vehicle seat system to stored locations corresponding to the second vehicle seat system being engaged with the respective at least first and second seat receptacles.

In some embodiments according to the first aspect of the present inventive subject matter, which can include or not include, as suitable, any of the other features described herein:
the vehicle seat monitoring system further comprises at least a fourth vehicle wireless signal transmitter, and
the fourth vehicle wireless signal transmitter is attached to the vehicle.

As noted above, in accordance with a second aspect of the present inventive subject matter, there is provided a method of obtaining information regarding one or more vehicle seats, comprising:
transmitting from a first vehicle wireless signal transmitter at least a first wireless signal, the first vehicle wireless signal transmitter attached to a vehicle at a first location;
receiving, via a first seat system antenna, at least one wireless signal transmitted from the first vehicle wireless signal transmitter, the first seat system antenna part of a first vehicle seat system comprising a first seat, the first seat system antenna and a first seat system wireless signal transmitter;
conjecturing as to a distance between the first vehicle wireless signal transmitter and the first seat system antenna based on the at least one wireless signal transmitted from the first vehicle wireless signal transmitter and received by the first seat system antenna; and
conjecturing as to whether the first vehicle seat system is engaged with a first seat receptacle, based on at least said conjecture as to said distance between the first vehicle wireless signal transmitter and the first seat system antenna, the first seat receptacle attached to the vehicle at a fourth location, the first vehicle seat system selectively engageable with at least the first seat receptacle.

In some embodiments according to the second aspect of the present inventive subject matter, which can include or not include, as suitable, any of the other features described herein, the method further comprises:
receiving, via a second seat system antenna, at least one wireless signal transmitted from the first vehicle wireless signal transmitter,
the second seat system antenna part of a second vehicle seat system comprising a second seat, the second seat system antenna and a second seat system wireless signal transmitter,
the second vehicle seat system selectively engageable with at least the first seat receptacle and the second seat receptacle;
conjecturing as to a distance between the first vehicle wireless signal transmitter and the second seat system antenna based on the at least one wireless signal transmitted from the first vehicle wireless signal transmitter and received by the second seat system antenna; and
conjecturing as to which of at least said first and second seat receptacles the second vehicle seat system is engaged, based on at least said conjecture as to said distance between the first vehicle wireless signal transmitter and the second seat system antenna.

In some embodiments according to the second aspect of the present inventive subject matter, which can include or not include, as suitable, any of the other features described herein:
said first vehicle seat system further comprises a first signal-reception-strength detector, and
said conjecturing as to a distance between the first vehicle wireless signal transmitter and the first seat system antenna is done based on a signal-reception-strength, detected by the first signal-reception-strength detector, of said at least one wireless signal transmitted from the first vehicle wireless signal transmitter and received by the first seat system antenna.

In some embodiments according to the second aspect of the present inventive subject matter, which can include or not include, as suitable, any of the other features described herein, said conjecturing as to a distance between the first vehicle wireless signal transmitter and the first seat system antenna is done by detecting the time-of-flight of said at least one wireless signal transmitted from the first vehicle wireless signal transmitter and received by the first seat system antenna.

In some embodiments according to the second aspect of the present inventive subject matter, which can include or not include, as suitable, any of the other features described herein:
the first vehicle seat system comprises a first antenna array, the first antenna array comprising the first seat system antenna, and
said conjecturing as to the distance between the first vehicle wireless signal transmitter and the first seat system antenna is done by (1) estimating an angle of arrival of the at least one wireless signal transmitted from the first vehicle wireless signal transmitter and received by the first antenna array, and (2) calculating a value for a difference in the height of the first vehicle wireless signal transmitter vs. the height of the first antenna array, divided by the cosine of the estimated angle of arrival.

In some embodiments according to the second aspect of the present inventive subject matter, which can include or not include, as suitable, any of the other features described herein, the method further comprises:
receiving, via a second seat system antenna, at least one wireless signal transmitted from the first vehicle wireless signal transmitter, the second seat system antenna part of a second vehicle seat system comprising a second seat, the second seat system antenna and a second seat system wireless signal transmitter;
transmitting from a second vehicle wireless signal transmitter at least a second wireless signal, the second vehicle wireless signal transmitter attached to the vehicle at a second location;
receiving, via the first seat system antenna, at least one wireless signal transmitted from the second vehicle wireless signal transmitter;
receiving, via the second seat system antenna, at least one wireless signal transmitted from the second vehicle wireless signal transmitter;
transmitting from a third vehicle wireless signal transmitter at least a third wireless signal, the third vehicle wireless signal transmitter attached to the vehicle at a third location;
receiving, via the first seat system antenna, at least one wireless signal transmitted from the third vehicle wireless signal transmitter; and
receiving, via the second seat system antenna, at least one wireless signal transmitted from the third vehicle wireless signal transmitter. In some of such embodiments, the method further comprises:
   conjecturing as to a distance between the second vehicle wireless signal transmitter and the first seat system antenna based on the at least one wireless signal transmitted from the second vehicle wireless signal transmitter and received by the first seat system antenna;
   conjecturing as to a distance between the third vehicle wireless signal transmitter and the first seat system antenna based on the at least one wireless signal transmitted from the third vehicle wireless signal transmitter and received by the first seat system antenna;
   conjecturing as to a distance between the first vehicle wireless signal transmitter and the second seat system antenna based on the at least one wireless signal transmitted from the first vehicle wireless signal transmitter and received by the second seat system antenna;
   conjecturing as to a distance between the second vehicle wireless signal transmitter and the second seat system antenna based on the at least one wireless signal transmitted from the second vehicle wireless signal transmitter and received by the second seat system antenna;
   conjecturing as to a distance between the third vehicle wireless signal transmitter and the second seat system antenna based on the at least one wireless signal transmitted from the third vehicle wireless signal transmitter and received by the second seat system antenna; and
   conjecturing as to which of at least first and second seat receptacles the second vehicle seat system is engaged is based on at least (1) said conjecture as to said distance between the first vehicle wireless signal transmitter and the second seat system antenna, (2) said conjecture as to the distance between the second vehicle wireless signal transmitter and the second seat system antenna, and (3) said conjecture as to the distance between the third vehicle wireless signal transmitter and the second seat system antenna, and
said conjecturing as to which of at least first and second seat receptacles the first vehicle seat system is engaged is based on at least (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna. In some of these embodiments:
said first vehicle seat system further comprises a first signal-reception-strength detector,
said conjecturing as to the distance between the first vehicle wireless signal transmitter and the first seat system antenna is done based on a signal-reception-strength, detected by the first signal-reception-strength detector, of said at least one wireless signal transmitted from the first vehicle wireless signal transmitter and received by the first seat system antenna,
said conjecturing as to the distance between the second vehicle wireless signal transmitter and the first seat system antenna is done based on a signal-reception-strength, detected by the second signal-reception-strength detector, of said at least one wireless signal transmitted from the second vehicle wireless signal transmitter and received by the first seat system antenna,
said conjecturing as to the distance between the first vehicle wireless signal transmitter and the third seat system antenna is done based on a signal-reception-strength, detected by the third signal-reception-strength detector, of said at least one wireless signal transmitted from the third vehicle wireless signal transmitter and received by the first seat system antenna,
said second vehicle seat system further comprises a second signal-reception-strength detector,
said conjecturing as to the distance between the first vehicle wireless signal transmitter and the second seat system antenna is done based on a signal-reception-strength, detected by the second signal-reception-strength detector, of said at least one wireless signal transmitted from the first vehicle wireless signal transmitter and received by the second seat system antenna,
said conjecturing as to the distance between the second vehicle wireless signal transmitter and the second seat system antenna is done based on a signal-reception-strength, detected by the second signal-reception-strength detector, of said at least one wireless signal transmitted from the second vehicle wireless signal transmitter and received by the second seat system antenna, and
said conjecturing as to the distance between the second vehicle wireless signal transmitter and the third seat system antenna is done based on a signal-reception-strength, detected by the third signal-reception-strength detector, of said at least one wireless signal transmitted from the third vehicle wireless signal transmitter and received by the second seat system antenna, or:
   said conjecturing as to which of at least first and second seat receptacles the first vehicle seat system is engaged is done by multilateration of (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna; and
   said conjecturing as to which of at least first and second seat receptacles the second vehicle seat system is engaged is done by multilateration of (1) said conjecture as to said distance between the first vehicle wireless signal transmitter and the second seat system antenna, (2) said conjecture as to the distance between the second vehicle wireless signal transmitter and the second seat system antenna, and (3) said conjecture as to the distance between the third vehicle wireless signal transmitter and the second seat system antenna.

In some embodiments according to the second aspect of the present inventive subject matter, which can include or not include, as suitable, any of the other features described herein:
the first vehicle seat system further comprises at least one sensor that senses at least one attribute of the first vehicle seat system, and
in said conjecturing as to a distance between the first vehicle wireless signal transmitter and the first seat system antenna, a location adjustment is made based on a selection of said at least one attribute. In some of such embodiments, the at least one attribute is/are selected from among the group of attributes consisting of orientation, fold status, tumble status and recline.

In accordance with a third aspect of the present inventive subject matter, there is provided a method of obtaining information regarding one or more vehicle seats, comprising:
transmitting from a first vehicle wireless signal transmitter at least a first wireless signal, the first vehicle wireless signal transmitter attached to a vehicle at a first location;
receiving, via a first seat system antenna array, at least one wireless signal transmitted from the first vehicle wireless signal transmitter, the first seat system antenna array part of a first vehicle seat system comprising a first seat, the first seat system antenna array and a first seat system wireless signal transmitter;
conjecturing as to an angle of arrival of the at least one wireless signal transmitted from the first vehicle wireless signal transmitter and received by the first seat system antenna array; and
conjecturing as to whether the first vehicle seat system is engaged with a first seat receptacle, based on at least said conjecture as to the angle of arrival of the at least one wireless signal transmitted from the first vehicle wireless signal transmitter and received by the first seat system antenna array, the first seat receptacle attached to the vehicle at a fourth location, the first vehicle seat system selectively engageable with the first seat receptacle.

In some embodiments according to the third aspect of the present inventive subject matter, which can include or not include, as suitable, any of the other features described herein, the method further comprises:
receiving, via a second seat system antenna array, at least one wireless signal transmitted from the first vehicle wireless signal transmitter,
the second seat system antenna array part of a second vehicle seat system comprising a second seat, the second seat system antenna array and a second seat system wireless signal transmitter,
the second vehicle seat system selectively engageable with at least the first seat receptacle and a second seat receptacle;
conjecturing as to an angle of arrival of the at least one wireless signal transmitted from the first vehicle wireless signal transmitter and received by the second seat system antenna array; and
conjecturing as to which of at least said first and second seat receptacles the second vehicle seat system is engaged, based on at least said conjecture as to the angle of arrival of the at least one wireless signal transmitted from the first vehicle wireless signal transmitter and received by the second seat system antenna array.

In some embodiments according to the third aspect of the present inventive subject matter, which can include or not include, as suitable, any of the other features described herein, the method further comprises conjecturing as to a distance between the first vehicle wireless signal transmitter and the first seat system antenna array by calculating a value for a difference in the height of the first vehicle wireless signal transmitter vs. the height of the first antenna array, divided by the cosine of the estimated angle of arrival of the at least one wireless signal transmitted from the first vehicle wireless signal transmitter and received by the first seat system antenna array.

In some embodiments according to the third aspect of the present inventive subject matter, which can include or not include, as suitable, any of the other features described herein, the method further comprises:
receiving, via a second seat system antenna array, at least one wireless signal transmitted from the first vehicle wireless signal transmitter, the second seat system antenna array part of a second vehicle seat system comprising a second seat, the second seat system antenna array and a second seat system wireless signal transmitter;
transmitting from a second vehicle wireless signal transmitter at least a second wireless signal, the second vehicle wireless signal transmitter attached to a vehicle at a second location;
receiving, via the first seat system antenna array, at least one wireless signal transmitted from the second vehicle wireless signal transmitter;
receiving, via the second seat system antenna array, at least one wireless signal transmitted from the second vehicle wireless signal transmitter;
transmitting from a third vehicle wireless signal transmitter at least a third wireless signal, the third vehicle wireless signal transmitter attached to a vehicle at a third location;
receiving, via the first seat system antenna array, at least one wireless signal transmitted from the third vehicle wireless signal transmitter; and
receiving, via the second seat system antenna array, at least one wireless signal transmitted from the third vehicle wireless signal transmitter.

In some of such embodiments, the method further comprises:
conjecturing as to an angle of arrival of the at least one wireless signal transmitted from the second vehicle wireless signal transmitter and received by the first seat system antenna array;
conjecturing as to an angle of arrival of the at least one wireless signal transmitted from the third vehicle wireless signal transmitter and received by the first seat system antenna array;
conjecturing as to an angle of arrival of the at least one wireless signal transmitted from the first vehicle wireless signal transmitter and received by the second seat system antenna array;
conjecturing as to an angle of arrival of the at least one wireless signal transmitted from the second vehicle wireless signal transmitter and received by the second seat system antenna array;
conjecturing as to an angle of arrival of the at least one wireless signal transmitted from the third vehicle wireless signal transmitter and received by the second seat system antenna array; and
conjecturing as to which of at least first and second seat receptacles the second vehicle seat system is engaged is based on at least (1) said conjecture as to said angle of arrival of the at least one wireless signal transmitted from the first vehicle wireless signal transmitter and received by the second seat system antenna array, (2) said conjecture as to said angle of arrival of the at least one wireless signal transmitted from the second vehicle wireless signal transmitter and received by the second seat system antenna array, and (3) said conjecture as to said angle of arrival of the at least one wireless signal transmitted from the third vehicle wireless signal transmitter and received by the second seat system antenna array, and
said conjecturing as to which of at least first and second seat receptacles the first vehicle seat system is engaged is based on at least (1) said conjecture as to said angle of arrival of the at least one wireless signal transmitted from the first vehicle wireless signal transmitter and received by the first seat system antenna array, (2) said conjecture as to said angle of arrival of the at least one wireless signal transmitted from the second vehicle wireless signal transmitter and received by the first seat system antenna array, and (3) said conjecture as to said angle of arrival of the at least one wireless signal transmitted from the third vehicle wireless signal transmitter and received by the first seat system antenna array.

In some of those embodiments (the expression "In some of those embodiments," as used herein, refers to additional features in some embodiments corresponding to the immediately preceding reference to "In some of such embodiments", i.e., the present paragraph indicates that some embodiments according to the preceding paragraph have the features described in the present paragraph):
said conjecturing as to which of at least first and second seat receptacles the first vehicle seat system is engaged is done by triangulation of (1) said conjecture as to said angle of arrival of the at least one wireless signal transmitted from the first vehicle wireless signal transmitter and received by the first seat system antenna array, (2) said conjecture as to said angle of arrival of the at least one wireless signal transmitted from the second vehicle wireless signal transmitter and received by the first seat system antenna array, and (3) said conjecture as to said angle of arrival of the at least one wireless signal transmitted from the third vehicle wireless signal transmitter and received by the first seat system antenna array, and
said conjecturing as to which of at least first and second seat receptacles the second vehicle seat system is engaged is done by triangulation of (1) said conjecture as to said angle of arrival of the at least one wireless signal transmitted from the first vehicle wireless signal transmitter and received by the second seat system antenna array, (2) said conjecture as to said angle of arrival of the at least one wireless signal transmitted from the second vehicle wireless signal transmitter and received by the second seat system antenna array, and (3) said conjecture as to said angle of arrival of the at least one wireless signal transmitted from the third vehicle wireless signal transmitter and received by the second seat system antenna array.

In some embodiments according to the third aspect of the present inventive subject matter, which can include or not include, as suitable, any of the other features described herein:
the first vehicle seat system further comprises at least one sensor that senses at least one attribute of the first vehicle seat system, and
in said conjecturing as to said angle of arrival of the at least one wireless signal transmitted from the first vehicle wireless signal transmitter and received by the first seat system antenna array, a location adjustment is made based on a selection of said at least one attribute.

In some of such embodiments, the at least one attribute is/are selected from among the group of attributes consisting of orientation, fold status, tumble status and recline.

In accordance with a fourth aspect of the present inventive subject matter, there is provided a calculation element, said calculation element configured to:
conjecture as to a location of at least a first seat system antenna, based on:
   a conjectured distance between a first vehicle wireless signal transmitter and the first seat system antenna,
   a conjectured distance between a second vehicle wireless signal transmitter and the first seat system antenna, and
   a conjectured distance between a third vehicle wireless signal transmitter and the first seat system antenna,
the first vehicle wireless signal transmitter attached to a vehicle at a first location,
the second vehicle wireless signal transmitter attached to the vehicle at a second location,
the third vehicle wireless signal transmitter attached to the vehicle at a third location,
the first seat antenna in a first vehicle seat system comprising a first seat, the first seat system antenna and a first seat system wireless signal transmitter.

In some embodiments according to the fourth aspect of the present inventive subject matter, which can include or not include, as suitable, any of the other features described herein, the calculation element is configured to also:
conjecture as to a location of at least a second seat system antenna, based on:
a conjectured distance between the first vehicle wireless signal transmitter and the second seat system antenna,
a conjectured distance between a second vehicle wireless signal transmitter and the second seat system antenna, and
a conjectured distance between a third vehicle wireless signal transmitter and the second seat system antenna.

In some embodiments according to the fourth aspect of the present inventive subject matter, which can include or not include, as suitable, any of the other features described herein, the calculation element is configured to also:
compare the conjectured location of the first seat system antenna to at least a first seat system location corresponding to a vehicle seat system being engaged with a first seat receptacle, and
conjecture as to whether the first vehicle seat system is engaged with the first seat receptacle based on the comparison of the conjectured location of the first seat system antenna to at least the first seat system location corresponding to a vehicle seat system being engaged with a first seat receptacle,
the first seat receptacle attached to the vehicle at a fourth location,
the first vehicle seat system selectively engageable with at least the first seat receptacle.

In some embodiments according to the fourth aspect of the present inventive subject matter, which can include or not include, as suitable, any of the other features described herein, the calculation element is configured to also:
compare the conjectured location of the first seat system antenna to a second seat system location corresponding to a vehicle seat system being engaged with a second seat receptacle, and
conjecture as to whether the first vehicle seat system is engaged with the second seat receptacle based on the comparison of the conjectured location of the first seat system antenna to the second seat system location corresponding to a vehicle seat system being engaged with the second seat receptacle,
the second seat receptacle attached to the vehicle at a fifth location,
the first vehicle seat system selectively engageable with at least the first seat receptacle and the second seat receptacle.

In accordance with a fifth aspect of the present inventive subject matter, there is provided a vehicle seat information detection system, comprising:
at least a first vehicle wireless signal transmitter,
at least a first seat system antenna,
at least a first seat system wireless signal transmitter, and
at least a first sensor selected from among:
   a seat occupancy sensor,
   a seat belt sensor,
   a seat orientation sensor,
   a seat fold status sensor,
   a seat tumble status sensor,
   a seat recline sensor, and
   a seat receptacle-engagement sensor.

In some embodiments according to the fifth aspect of the present inventive subject matter, which can include or not include, as suitable, any of the other features described herein:
the vehicle seat monitoring system further comprises packaging, and
the at least a first vehicle wireless signal transmitter, the at least a first seat system antenna, the at least a first seat system wireless signal transmitter, and the at least a first sensor are inside the packaging.

In some embodiments according to the fifth aspect of the present inventive subject matter, which can include or not include, as suitable, any of the other features described herein, the vehicle seat monitoring system further comprises at least a second vehicle wireless signal transmitter and a third vehicle wireless signal transmitter. In some of such embodiments, the vehicle seat monitoring system further comprises at least a second seat system antenna and at least a second seat system wireless signal transmitter.

In some embodiments according to the fifth aspect of the present inventive subject matter, which can include or not include, as suitable, any of the other features described herein, the vehicle seat monitoring system further comprises at least a second seat system antenna and at least a second seat system wireless signal transmitter.

In some embodiments according to the fifth aspect of the present inventive subject matter, which can include or not include, as suitable, any of the other features described herein, a first transceiver comprises the first seat system antenna and the first seat system wireless signal transmitter.

In accordance with a sixth aspect of the present inventive subject matter, there is provided a vehicle seat system, comprising
a first vehicle seat;
a first seat system antenna;
a first seat system wireless signal transmitter; and
at least a first sensor selected from among:
   a seat occupancy sensor,
   a seat belt sensor,
   a seat orientation sensor,
   a seat fold status sensor,
   a seat tumble status sensor,
   a seat recline sensor, and
   a seat receptacle-engagement sensor.

In accordance with a seventh aspect of the present inventive subject matter, there is provided a vehicle seat information detection system, comprising:
a first seat system antenna;
a first seat system wireless signal transmitter; and
at least a first sensor selected from among:
   a seat occupancy sensor,
   a seat belt sensor,
   a seat orientation sensor,
   a seat fold status sensor,
   a seat tumble status sensor,
   a seat recline sensor, and
   a seat receptacle-engagement sensor.

In accordance with an eighth aspect of the present inventive subject matter, there is provided a vehicle seat information detection system, comprising:
at least a first vehicle wireless signal transmitter, a second vehicle wireless signal transmitter and a third vehicle wireless signal transmitter,
at least first and second seat receptacles; and
at least first and second vehicle seat systems,
the first vehicle wireless signal transmitter attached to a vehicle at a first location,
the second vehicle wireless signal transmitter attached to the vehicle at a second location,
the third vehicle wireless signal transmitter attached to the vehicle at a third location,
the first seat receptacle attached to the vehicle at a fourth location,
the second seat receptacle attached to the vehicle at a fifth location,
the first vehicle seat system comprising a first seat, a first seat system antenna and a first seat system wireless signal transmitter,
the second vehicle seat system comprising a second seat, a second seat system antenna and a second seat system wireless signal transmitter,
the first vehicle seat system selectively engageable with at least the first seat receptacle and the second seat receptacle,
the second vehicle seat system selectively engageable with at least the first seat receptacle and the second seat receptacle.

In some embodiments according to the eighth aspect of the present inventive subject matter, which can include or not include, as suitable, any of the other features described herein:
the first vehicle seat system further comprises at least a first signal-reception-strength detector,
said conjecture as to the distance between the first vehicle wireless signal transmitter and the first seat system antenna is based on a signal-reception-strength value, detected by the first signal-reception-strength detector, of at least one wireless signal emitted from the first vehicle wireless signal transmitter and received by the first seat system antenna,
the second vehicle seat system further comprises at least a second signal-reception-strength detector, and
said conjecture as to the distance between the first vehicle wireless signal transmitter and the second seat system antenna is based on a signal-reception-strength value, detected by the second signal-reception-strength detector, of at least one wireless signal emitted from the first vehicle wireless signal transmitter and received by the second seat system antenna.

In some embodiments according to the eighth aspect of the present inventive subject matter, which can include or not include, as suitable, any of the other features described herein:
a first transceiver comprises the first seat system antenna and the first seat system wireless signal transmitter,
a second transceiver comprises the second seat system antenna and the second seat system wireless signal transmitter, and
a third transceiver comprises the third seat system antenna and the third seat system wireless signal transmitter.

In some embodiments according to the eighth aspect of the present inventive subject matter, which can include or not include, as suitable, any of the other features described herein:
the vehicle seat information detection system comprises a first processor, and
the first processor comprises a calculation element.

In some embodiments according to the eighth aspect of the present inventive subject matter, which can include or not include, as suitable, any of the other features described herein:
the vehicle seat information detection system comprises at least a first data-receiving antenna, and
the first data-receiving antenna is configured to receive at least: (1) wireless signals emitted from the first seat system wireless signal transmitter, (2) wireless signals emitted from the second seat system wireless signal transmitter, and (3) wireless signals emitted from the third seat system wireless signal transmitter.

In some of such embodiments:
the vehicle seat information detection system comprises an ECU and a BCM,
the first data-receiving antenna communicates with the ECU,
the ECU comprises a calculation element, and
the ECU communicates with the BCM via a bus.

In some of those embodiments, the bus is a CAN FD bus.

In some embodiments according to the eighth aspect of the present inventive subject matter, which can include or not include, as suitable, any of the other features described herein:
the first vehicle seat system further comprises at least a first energy source, and
the second vehicle seat system further comprises at least a second energy source.

In some of such embodiments:
the first energy source comprises at least a first battery, and the second energy source comprises at least a second battery, or
the first energy source comprises at least a first super capacitor, and the second energy source comprises at least a second super capacitor.

In some embodiments according to the eighth aspect of the present inventive subject matter, which can include or not include, as suitable, any of the other features described herein, the first vehicle seat system comprises at least a first sensor. In some of such embodiments, the at least a first sensor comprises at least one sensor selected from among:
a seat occupancy sensor,
a seat belt sensor,
a seat orientation sensor,
a seat fold status sensor,
a seat tumble status sensor,
a recline sensor, and
a seat receptacle-engagement sensor.

In some embodiments according to the eighth aspect of the present inventive subject matter, which can include or not include, as suitable, any of the other features described herein:
the first vehicle seat system comprises at least a first sensor, and
the second vehicle seat system comprises at least a second sensor.

In some of such embodiments:
the at least a first sensor comprises at least one sensor selected from among:
   a seat occupancy sensor,
   a seat belt sensor,
   a seat orientation sensor,
   a seat fold status sensor,
   a seat tumble status sensor,
   a recline sensor, and
   a seat receptacle-engagement sensor, and
the at least a second sensor comprises at least one sensor selected from among:
   a seat occupancy sensor,
   a seat belt sensor,
   a seat orientation sensor,
   a seat fold status sensor,
   a seat tumble status sensor,
   a recline sensor, and
   a seat receptacle-engagement sensor.

In some of those embodiments:
the first seat system wireless signal transmitter is configured to send data sensed by the at least a first sensor, and
the second seat system wireless signal transmitter is configured to send data sensed by the at least a second sensor.

In some embodiments according to the eighth aspect of the present inventive subject matter, which can include or not include, as suitable, any of the other features described herein:
the first vehicle seat system further comprises a first storage device,
the first storage device comprises first storage device stored information,
the first storage device stored information comprises information that indicates the identity of the first vehicle seat system,
the second vehicle seat system further comprises a second storage device,
the second storage device comprises second storage device stored information, and
the second storage device stored information comprises information that indicates the identity of the second vehicle seat system.

In some embodiments according to the eighth aspect of the present inventive subject matter, which can include or not include, as suitable, any of the other features described herein:
the vehicle seat monitoring system further comprises at least a fourth vehicle wireless signal transmitter, and
the fourth vehicle wireless signal transmitter is attached to the vehicle.

In accordance with a ninth aspect of the present inventive subject matter, there is provided a vehicle seat information detection system, comprising:
at least a first vehicle wireless signal transmitter;
at least first and second seat receptacles;
at least first and second vehicle seat systems; and
a calculation element,
the first vehicle wireless signal transmitter attached to a vehicle at a first location,
the first seat receptacle attached to the vehicle at a fourth location,
the second seat receptacle attached to the vehicle at a fifth location,
the first vehicle seat system comprising a first seat, a first seat system antenna and a first seat system wireless signal transmitter,
the second vehicle seat system comprising a second seat, a second seat system antenna and a second seat system wireless signal transmitter,
the first vehicle seat system selectively engageable with at least the first seat receptacle and the second seat receptacle,
the second vehicle seat system selectively engageable with at least the first seat receptacle and the second seat receptacle,
the calculation element configured to conjecture as to which of the at least first and second seat receptacles the first vehicle seat system is engaged, based on at least a conjecture as to a distance between the first vehicle wireless signal transmitter and the first seat system antenna, said conjecture as to the distance between the first vehicle wireless signal transmitter and the first seat system antenna being based on at least one wireless signal sent from the first vehicle wireless signal transmitter and received by the first seat system antenna,
the calculation element configured to conjecture as to which of the at least first and second seat receptacles the second vehicle seat system is engaged, based on at least a conjecture as to a distance between the first vehicle wireless signal transmitter and the second seat system antenna, said conjecture as to the distance between the first vehicle wireless signal transmitter and the second seat system antenna being based on at least one wireless signal sent from the first vehicle wireless signal transmitter and received by the second seat system antenna.

In some embodiments according to the ninth aspect of the present inventive subject matter, which can include or not include, as suitable, any of the other features described herein:
the first vehicle seat system further comprises at least a first signal-reception-strength detector,
said conjecture as to the distance between the first vehicle wireless signal transmitter and the first seat system antenna is based on a signal-reception-strength value, detected by the first signal-reception-strength detector, of at least one wireless signal emitted from the first vehicle wireless signal transmitter and received by the first seat system antenna,
the second vehicle seat system further comprises at least a second signal-reception-strength detector,
said conjecture as to the distance between the first vehicle wireless signal transmitter and the second seat system antenna is based on a signal-reception-strength value, detected by the second signal-reception-strength detector, of at least one wireless signal emitted from the first vehicle wireless signal transmitter and received by the second seat system antenna.

In some embodiments according to the ninth aspect of the present inventive subject matter, which can include or not include, as suitable, any of the other features described herein:
a first transceiver comprises the first seat system antenna and the first seat system wireless signal transmitter, and
a second transceiver comprises the second seat system antenna and the second seat system wireless signal transmitter.

In some embodiments according to the ninth aspect of the present inventive subject matter, which can include or not include, as suitable, any of the other features described herein:
the vehicle seat information detection system comprises a first processor, and
the first processor comprises the calculation element.

In some embodiments according to the ninth aspect of the present inventive subject matter, which can include or not include, as suitable, any of the other features described herein:
the vehicle seat information detection system comprises at least a first data-receiving antenna, and
the first data-receiving antenna is configured to receive at least: (1) wireless signals emitted from the first seat system wireless signal transmitter, (2) wireless signals emitted from the second seat system wireless signal transmitter, and (3) wireless signals emitted from the third seat system wireless signal transmitter.

In some of such embodiments:
the vehicle seat information detection system comprises an ECU and a BCM,
the first data-receiving antenna communicates with the ECU,
the ECU comprises the calculation element, and
the ECU communicates with the BCM via a bus.

In some of those embodiments, the bus is a CAN FD bus.

In some embodiments according to the ninth aspect of the present inventive subject matter, which can include or not include, as suitable, any of the other features described herein:
the first vehicle seat system further comprises at least a first energy source, and
the second vehicle seat system further comprises at least a second energy source.

In some of such embodiments:
the first energy source comprises at least a first battery, and the second energy source comprises at least a second battery, or
the first energy source comprises at least a first super capacitor, and the second energy source comprises at least a second super capacitor.

In some embodiments according to the ninth aspect of the present inventive subject matter, which can include or not include, as suitable, any of the other features described herein:
the conjecture by the calculation element as to which of the at least first and second seat receptacles the first vehicle seat system is engaged, is based further on at least one attribute of the first vehicle seat system; and
the conjecture by the calculation element as to which of the at least first and second seat receptacles the second vehicle seat system is engaged, is based further on at least one attribute of the second vehicle seat system.

In some embodiments according to the ninth aspect of the present inventive subject matter, which can include or not include, as suitable, any of the other features described herein, the vehicle seat monitoring system further comprises at least a first processor.

In some embodiments according to the ninth aspect of the present inventive subject matter, which can include or not include, as suitable, any of the other features described herein,
the first vehicle seat system comprises at least a first sensor.

In some of such embodiments, the at least a first sensor comprises at least one sensor selected from among:
a seat occupancy sensor,
a seat belt sensor,
a seat orientation sensor,
a seat fold status sensor,
a seat tumble status sensor,
a seat recline sensor, and
a seat receptacle-engagement sensor.

In some embodiments according to the ninth aspect of the present inventive subject matter, which can include or not include, as suitable, any of the other features described herein:
the first vehicle seat system comprises at least a first sensor, and
the second vehicle seat system comprises at least a second sensor.

In some of such embodiments:
the at least a first sensor comprises at least one sensor selected from among:
   a seat occupancy sensor,
   a seat belt sensor,
   a seat orientation sensor,
   a seat fold status sensor,
   a seat tumble status sensor,
   a seat recline sensor, and
   a seat receptacle-engagement sensor, and
the at least a second sensor comprises at least one sensor selected from among:
   a seat occupancy sensor,
   a seat belt sensor,
   a seat orientation sensor,
   a seat fold status sensor,
   a seat tumble status sensor,
   a seat recline sensor, and
   a seat receptacle-engagement sensor.

In some of those embodiments:
the first seat system wireless signal transmitter is configured to transmit data sensed by the at least a first sensor, and
the second seat system wireless signal transmitter is configured to transmit data sensed by the at least a second sensor.

In some embodiments according to the ninth aspect of the present inventive subject matter, which can include or not include, as suitable, any of the other features described herein:
the first vehicle seat system further comprises a first storage device,
the first storage device comprises first storage device stored information,
the first storage device stored information comprises information that indicates the identity of the first vehicle seat system,
the second vehicle seat system further comprises a second storage device,
the second storage device comprises second storage device stored information, and
the second storage device stored information comprises information that indicates the identity of the second vehicle seat system.

In some embodiments according to the ninth aspect of the present inventive subject matter, which can include or not include, as suitable, any of the other features described herein:
the first vehicle seat system comprises a first antenna array, the first antenna array comprising the first seat system antenna,
the second vehicle seat system comprises a second antenna array, the second antenna array comprising the second seat system antenna, and
said conjecturing as to the distance between the first vehicle wireless signal transmitter and the first seat system antenna is done by (1) estimating an angle of arrival of the at least one wireless signal transmitted from the first vehicle wireless signal transmitter and received by the first antenna array, and (2) calculating a value for a difference in the height of the first vehicle wireless signal transmitter vs. the height of the first antenna array, divided by the cosine of the estimated angle of arrival.

In some embodiments according to the ninth aspect of the present inventive subject matter, which can include or not include, as suitable, any of the other features described herein:
the vehicle seat information detection system further comprise at least a second vehicle wireless signal transmitter, and
the second vehicle wireless signal transmitter is attached to a vehicle at a second location.

In accordance with a tenth aspect of the present inventive subject matter, there is provided a vehicle seat information detection system, comprising:
at least a first vehicle wireless signal transmitter, a second vehicle wireless signal transmitter and a third vehicle wireless signal transmitter,
at least first and second seat receptacles;
at least a first vehicle seat system; and
a calculation element,
the first vehicle wireless signal transmitter attached to a vehicle at a first location,
the second vehicle wireless signal transmitter attached to the vehicle at a second location,
the third vehicle wireless signal transmitter attached to the vehicle at a third location,
the first seat receptacle attached to the vehicle at a fourth location,
the second seat receptacle attached to the vehicle at a fifth location,
the first vehicle seat system comprising a first seat, a first seat system antenna and a first seat system wireless signal transmitter,
the first vehicle seat system selectively engageable with at least the first seat receptacle and the second seat receptacle,
the calculation element configured to conjecture as to which of the at least first and second seat receptacles the first vehicle seat system is engaged, based on at least conjectures as to:
   a distance between the first vehicle wireless signal transmitter and the first seat system antenna, said conjecture as to the distance between the first vehicle wireless signal transmitter and the first seat system antenna being based on at least one wireless signal sent from the first vehicle wireless signal transmitter and received by the first seat system antenna,
   a distance between the second vehicle wireless signal transmitter and the first seat system antenna, said conjecture as to the distance between the second vehicle wireless signal transmitter and the first seat system antenna being based on at least one wireless signal sent from the second vehicle wireless signal transmitter and received by the first seat system antenna, and
   a distance between the third vehicle wireless signal transmitter and the first seat system antenna, said conjecture as to the distance between the third vehicle wireless signal transmitter and the first seat system antenna being based on at least one wireless signal sent from the third vehicle wireless signal transmitter and received by the first seat system antenna.

In accordance with an eleventh aspect of the present inventive subject matter, there is provided a vehicle seat information detection system, comprising:
at least a first vehicle wireless signal transmitter,
at least a first seat receptacle;
at least a first vehicle seat system; and
a calculation element,
the first vehicle wireless signal transmitter attached to a vehicle at a first location,
the first seat receptacle attached to the vehicle at a fourth location,
the first vehicle seat system comprising a first seat, a first seat system antenna and a first seat system wireless signal transmitter,
the first vehicle seat system selectively engageable with at least the first seat receptacle,
the calculation element configured to conjecture as to whether the first vehicle seat system is engaged with the first seat receptacle, based on at least a conjecture as to a distance between the first vehicle wireless signal transmitter and the first seat system antenna, said conjecture as to the distance between the first vehicle wireless signal transmitter and the first seat system antenna being based on at least one wireless signal sent from the first vehicle wireless signal transmitter and received by the first seat system antenna.

In some embodiments according to the eleventh aspect of the present inventive subject matter, which can include or not include, as suitable, any of the other features described herein:
the first vehicle seat system further comprises at least a first signal-reception-strength detector, and
said conjecture as to the distance between the first vehicle wireless signal transmitter and the first seat system antenna is based on a signal-reception-strength value, detected by the first signal-reception-strength detector, of at least one wireless signal emitted from the first vehicle wireless signal transmitter and received by the first seat system antenna.

In some embodiments according to the eleventh aspect of the present inventive subject matter, which can include or not include, as suitable, any of the other features described herein, a first transceiver comprises the first seat system antenna and the first seat system wireless signal transmitter.

In some embodiments according to the eleventh aspect of the present inventive subject matter, which can include or not include, as suitable, any of the other features described herein:
the vehicle seat information detection system comprises a first processor, and
the first processor comprises the calculation element.

In some embodiments according to the eleventh aspect of the present inventive subject matter, which can include or not include, as suitable, any of the other features described herein:
the vehicle seat information detection system comprises at least a first data-receiving antenna, and
the first data-receiving antenna is configured to receive at least wireless signals emitted from the first seat system wireless signal transmitter.

In some of such embodiments:
the vehicle seat information detection system comprises an ECU and a BCM,
the first data-receiving antenna communicates with the ECU,
the ECU comprises the calculation element, and
the ECU communicates with the BCM via a bus.

In some of those embodiments, the bus is a CAN FD bus.

In some embodiments according to the eleventh aspect of the present inventive subject matter, which can include or not include, as suitable, any of the other features described herein, the first vehicle seat system further comprises at least a first energy source.

In some of such embodiments, the first energy source comprises at least a first battery, or the first energy source comprises at least a first super capacitor.

In some embodiments according to the eleventh aspect of the present inventive subject matter, which can include or not include, as suitable, any of the other features described herein:
the conjecture by the calculation element as to whether the first vehicle seat system is engaged with the first seat receptacle is based further on at least one attribute of the first vehicle seat system.

In some embodiments according to the eleventh aspect of the present inventive subject matter, which can include or not include, as suitable, any of the other features described herein, the vehicle seat monitoring system further comprises at least a first processor.

In some embodiments according to the eleventh aspect of the present inventive subject matter, which can include or not include, as suitable, any of the other features described herein, the first vehicle seat system comprises at least a first sensor.

In some of such embodiments, the at least a first sensor comprises at least one sensor selected from among:
a seat occupancy sensor,
a seat belt sensor,
a seat orientation sensor,
a seat fold status sensor,
a seat tumble status sensor,
a seat recline sensor, and
a seat receptacle-engagement sensor.

In some of those embodiments, the first seat system wireless signal transmitter is configured to transmit data sensed by the at least a first sensor.

In some embodiments according to the eleventh aspect of the present inventive subject matter, which can include or not include, as suitable, any of the other features described herein:
the first vehicle seat system further comprises a first storage device,
the first storage device comprises first storage device stored information, and
the first storage device stored information comprises information that indicates the identity of the first vehicle seat system.

In some embodiments according to the eleventh aspect of the present inventive subject matter, which can include or not include, as suitable, any of the other features described herein:
the first vehicle seat system comprises a first antenna array, the first antenna array comprising the first seat system antenna, and
said conjecturing as to the distance between the first vehicle wireless signal transmitter and the first seat system antenna is done by (1) estimating an angle of arrival of the at least one wireless signal transmitted from the first vehicle wireless signal transmitter and received by the first antenna array, and (2) calculating a value for a difference in the height of the first vehicle wireless signal transmitter vs. the height of the first antenna array, divided by the cosine of the estimated angle of arrival.

In accordance with a twelfth aspect of the present inventive subject matter, there is provided a vehicle seat information detection system, comprising:
at least a first vehicle wireless signal transmitter,
at least a first seat receptacle; and
at least a first vehicle seat system,
the first vehicle wireless signal transmitter attached to a vehicle at a first location,
the first seat receptacle attached to the vehicle at a fourth location,
the first vehicle seat system comprising a first seat, a first seat system antenna and a first seat system wireless signal transmitter,
the first vehicle seat system selectively engageable with at least the first seat receptacle.

In some embodiments according to the twelfth aspect of the present inventive subject matter, which can include or not include, as suitable, any of the other features described herein, the first vehicle seat system further comprises at least a first signal-reception-strength detector.

In some embodiments according to the twelfth aspect of the present inventive subject matter, which can include or not include, as suitable, any of the other features described herein, a first transceiver comprises the first seat system antenna and the first seat system wireless signal transmitter.

In some embodiments according to the twelfth aspect of the present inventive subject matter, which can include or not include, as suitable, any of the other features described herein:
the vehicle seat information detection system comprises at least a first data-receiving antenna, and
the first data-receiving antenna is configured to receive at least wireless signals emitted from the first seat system wireless signal transmitter.

In some of such embodiments:
the vehicle seat information detection system comprises an ECU and a BCM,
the first data-receiving antenna communicates with the ECU, and
the ECU communicates with the BCM via a bus.

In some of those embodiments, the bus is a CAN FD bus.

In some embodiments according to the twelfth aspect of the present inventive subject matter, which can include or not include, as suitable, any of the other features described herein, the first vehicle seat system further comprises at least a first energy source. In some of such embodiments, the first energy source comprises at least a first battery, or the first energy source comprises at least a first super capacitor.

In some embodiments according to the twelfth aspect of the present inventive subject matter, which can include or not include, as suitable, any of the other features described herein, the vehicle seat monitoring system further comprises at least a first processor.

In some embodiments according to the twelfth aspect of the present inventive subject matter, which can include or not include, as suitable, any of the other features described herein, the first vehicle seat system comprises at least a first sensor.

In some of such embodiments, the at least a first sensor comprises at least one sensor selected from among:
a seat occupancy sensor,
a seat belt sensor,
a seat orientation sensor,
a seat fold status sensor,
a seat tumble status sensor,
a seat recline sensor, and
a seat receptacle-engagement sensor.

In some of those embodiments, the first seat system wireless signal transmitter is configured to transmit data sensed by the at least a first sensor.

In some embodiments according to the twelfth aspect of the present inventive subject matter, which can include or not include, as suitable, any of the other features described herein:
the first vehicle seat system further comprises a first storage device,
the first storage device comprises first storage device stored information, and
the first storage device stored information comprises information that indicates the identity of the first vehicle seat system.

In accordance with a thirteenth aspect of the present inventive subject matter, there is provided a non-transitory computer-readable medium having computer-executable commands, said computer-executable commands comprising:
conjecturing as to a distance between a first vehicle wireless signal transmitter and a first seat system antenna based on at least one wireless signal transmitted from the first vehicle wireless signal transmitter and received by the first seat system antenna; and
conjecturing as to whether a first vehicle seat system is engaged with a first seat receptacle, based on at least said conjecture as to said distance between the first vehicle wireless signal transmitter and the first seat system antenna.

In some embodiments according to the thirteenth aspect of the present inventive subject matter, which can include or not include, as suitable, any of the other features described herein, the non-transitory computer-readable medium further has computer-executable commands for:
conjecturing as to a distance between a second vehicle wireless signal transmitter and the first seat system antenna based on at least one wireless signal transmitted from the second vehicle wireless signal transmitter and received by the first seat system antenna;
conjecturing as to a distance between a third vehicle wireless signal transmitter and the first seat system antenna based on at least one wireless signal transmitted from the third vehicle wireless signal transmitter and received by the first seat system antenna; and
conjecturing as to whether the first vehicle seat system is engaged with a first seat receptacle based on at least (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna.

In some of such embodiments, said conjecturing as to whether the first vehicle seat system is engaged with the first seat receptacle is done by multilateration of (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna.

In some embodiments according to the thirteenth aspect of the present inventive subject matter, which can include or not include, as suitable, any of the other features described herein, in said conjecturing as to a distance between the first vehicle wireless signal transmitter and the first seat system antenna, a location adjustment is made based on a selection of at least one attribute of a vehicle seat system.

In some of such embodiments, the at least one attribute is/are selected from among the group of attributes consisting of orientation, fold status, tumble status and recline.

In accordance with a fourteenth aspect of the present inventive subject matter, there is provided a non-transitory computer-readable medium having computer-executable commands, said computer-executable commands comprising:
conjecturing as to a location of a first seat system antenna by performing multilateration of (1) a conjecture as to a distance between a first vehicle wireless signal transmitter and the first seat system antenna, (2) a conjecture as to a distance between a second vehicle wireless signal transmitter and the first seat system antenna, and (3) a conjecture as to a distance between a third vehicle wireless signal transmitter and the first seat system antenna;
comparing the conjectured location of the first seat system antenna to at least a first seat system location corresponding to a vehicle seat system being engaged with a first seat receptacle, and
conjecturing as to whether the first vehicle seat system is engaged with the first seat receptacle based on the comparison of the conjectured location of the first seat system antenna to at least the first seat system location corresponding to a vehicle seat system being engaged with a first seat receptacle.

In accordance with a fifteenth aspect of the present inventive subject matter, there is provided a processor on which is stored software having computer-executable commands, said computer-executable commands comprising:
conjecturing as to a distance between a first vehicle wireless signal transmitter and a first seat system antenna based on at least one wireless signal transmitted from the first vehicle wireless signal transmitter and received by the first seat system antenna; and
conjecturing as to whether a first vehicle seat system is engaged with a first seat receptacle, based on at least said conjecture as to said distance between the first vehicle wireless signal transmitter and the first seat system antenna.

In some embodiments according to the thirteenth aspect of the present inventive subject matter, which can include or not include, as suitable, any of the other features described herein, the software further has computer-executable commands for:
conjecturing as to a distance between a second vehicle wireless signal transmitter and the first seat system antenna based on at least one wireless signal transmitted from the second vehicle wireless signal transmitter and received by the first seat system antenna;
conjecturing as to a distance between a third vehicle wireless signal transmitter and the first seat system antenna based on at least one wireless signal transmitted from the third vehicle wireless signal transmitter and received by the first seat system antenna; and
conjecturing as to whether the first vehicle seat system is engaged with a first seat receptacle based on at least (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna.

In some of such embodiments, said conjecturing as to whether the first vehicle seat system is engaged with the first seat receptacle is done by multilateration of (1) said conjecture as to said distance between the first vehicle wireless signal transmitter and the first seat system antenna, (2) said conjecture as to the distance between the second vehicle wireless signal transmitter and the first seat system antenna, and (3) said conjecture as to the distance between the third vehicle wireless signal transmitter and the first seat system antenna.

In some embodiments according to the thirteenth aspect of the present inventive subject matter, which can include or not include, as suitable, any of the other features described herein, in said conjecturing as to a distance between the first vehicle wireless signal transmitter and the first seat system antenna, a location adjustment is made based on a selection of at least one attribute of a vehicle seat system.

In some of such embodiments, the at least one attribute is/are selected from among the group of attributes consisting of orientation, fold status, tumble status and recline.

In accordance with a sixteenth aspect of the present inventive subject matter, there is provided a processor on which is stored software having computer-executable commands, said computer-executable commands comprising:
conjecturing as to a location of a first seat system antenna by performing multilateration of (1) a conjecture as to a distance between a first vehicle wireless signal transmitter and the first seat system antenna, (2) a conjecture as to a distance between a second vehicle wireless signal transmitter and the first seat system antenna, and (3) a conjecture as to a distance between a third vehicle wireless signal transmitter and the first seat system antenna;
comparing the conjectured location of the first seat system antenna to at least a first seat system location corresponding to a vehicle seat system being engaged with a first seat receptacle, and
conjecturing as to whether the first vehicle seat system is engaged with the first seat receptacle based on the comparison of the conjectured location of the first seat system antenna to at least the first seat system location corresponding to a vehicle seat system being engaged with a first seat receptacle.

Embodiments in accordance with the present inventive subject matter are described herein in detail in order to provide exact features of representative embodiments that are within the overall scope of the present inventive subject matter. The present inventive subject matter is not limited to such detail.

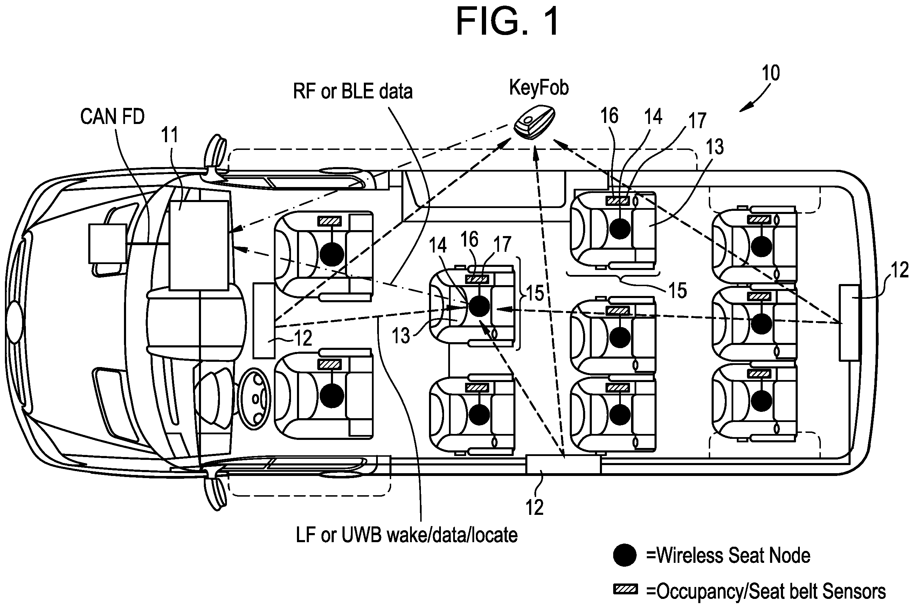

**Fig. 1** schematically depicts a first embodiment of a vehicle with a vehicle seat information detection system **10** in accordance with the present inventive subject matter. The vehicle seat information detection system **10** comprises a central module **11** and a plurality of vehicle seat systems **15.**

The central module **11** is integrated with a PEPS ECU that has external antenna drivers and an internal backchannel (RF-receiving) antenna and CAN communication capability. The central module has a plurality of vehicle wireless signal transmitters in the form of external LF antennas **12** wired to it. The LF antennas send out communication and location signals.

Each of the vehicle seat systems **15** is in the form of a seat **13** with a seat module **14** (i.e., each seat **13** has a seat module **14**), each seat module **14** having a seat system antenna (to receive information from the central module, similar to how some existing PEPS keyfobs currently work with a 3D coil). Each seat module **14** (node) is integrated with an occupancy sensor **16** and a seat belt sensor **17.** Each seat module **14** powers its occupancy sensor **16** and its seat belt sensor **17.** Each seat module **14** reads (i.e., obtains information from) its occupancy sensor **16** and its seat belt sensor **17,** and transmits such information (readings) over an RF antenna (much like some PEPS keyfobs currently work).

Depending on the size and tuning of the vehicle, multiple vehicle wireless signal transmitters (LF antennas **12**) are placed strategically around the vehicle.

As an alternative to the above system (depending, e.g., on user preference), the present inventive subject matter also provides a vehicle seat information detection system that is similar to the one described above (i.e., referring to **Fig. 1**), except that instead of LF and RF antennas currently widely used in PEPS systems, UWBBLE systems (expected to be used in future PEPS systems) are employed. Instead of LF antennas, UWB antennas are used and employ TOF (time-of-flight) to locate the seat systems, and instead of RF antennas, BLE antennas are used as the backchannel communication.

The vehicle seat information detection systems described above can provide cost savings to the extent they employ existing technology, components and systems. As noted above, systems in accordance with the present inventive subject matter can be integrated with existing PEPS systems, if desired, e.g., by using an LF antenna (or antennas) already on the vehicle.

In another representative embodiment, a central ECU with LF or UWB antennas sends out locating data fields that are received by seat modules and a keyfob. The seat modules and the keyfob send the status of the sensors back to the central ECU via RF or BLE. The central ECU comprises a microprocessor, a CAN interface, a 12V input power interface, an external LF or UWB interface, and an internal RF or BLE receiver. Each wireless seat node comprises a microprocessor, a coin battery power interface, an LF 3D coil or UWB receiver, and an internal RF or BLE transmitter. Each seat and keyfob is located using locating fields sent from the central ECU to the seat modules, using RSSI and/or TOF. The seat nodes power and monitor the occupancy and seat sensor status. The central ECU and the seat nodes communicate OTA (over the air) via LF/UWB and/or RF/BLE. The central ECU is powered from the vehicle battery, while the seat nodes each have their own battery supplies.

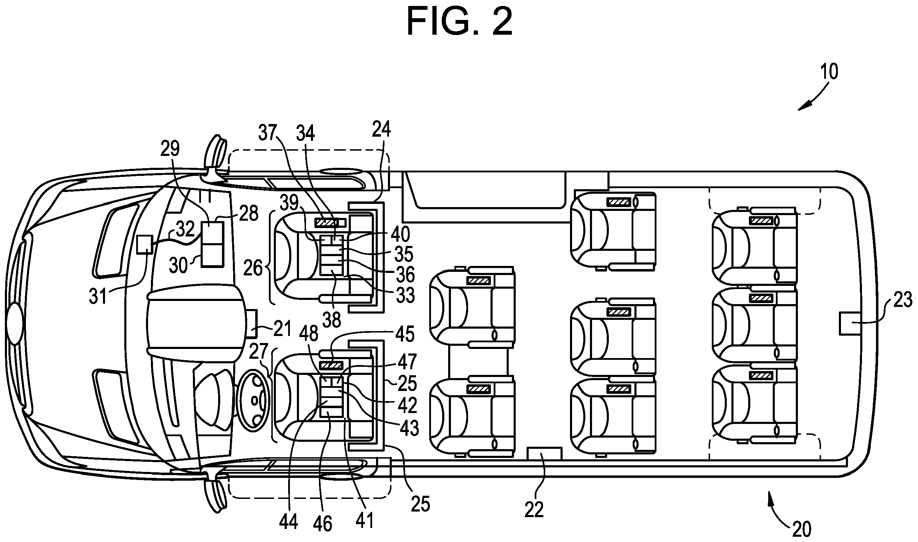

**Fig. 2** schematically depicts a second embodiment of a vehicle with a vehicle seat information detection system **20** in accordance with the present inventive subject matter. The vehicle seat information detection system **20** comprises:
a first vehicle wireless signal transmitter **21,** a second vehicle wireless signal transmitter **22** and a third vehicle wireless signal transmitter **23;**
a first seat receptacle **24** and a second seat receptacle **25;**
a first vehicle seat system **26** and a second vehicle seat system **27;**
an ECU **28** that comprises a calculation element **29** and a data-receiving antenna **30;**
a BCM **31;** and
a CAN FD bus **32** through which the ECU **28** communicates with the BCM **31.**

The first vehicle seat system **26** comprises a first seat **33,** a first transceiver **34,** a first signal-reception-strength detector **35,** a first energy source **36** (a battery or a super capacitor), a first sensor **37,** and a first storage device **38.** The first transceiver **34** comprises a first seat system antenna **39** and a first seat system wireless signal transmitter **40.**

The second vehicle seat system **27** comprises a second seat **41,** a second transceiver **42,** a second signal-reception-strength detector **43,** a second energy source **44** (a battery or a super capacitor), a second sensor **45,** and a second storage device **46.** The second transceiver **42** comprises a second seat system antenna **47** and a second seat system wireless signal transmitter **48.**

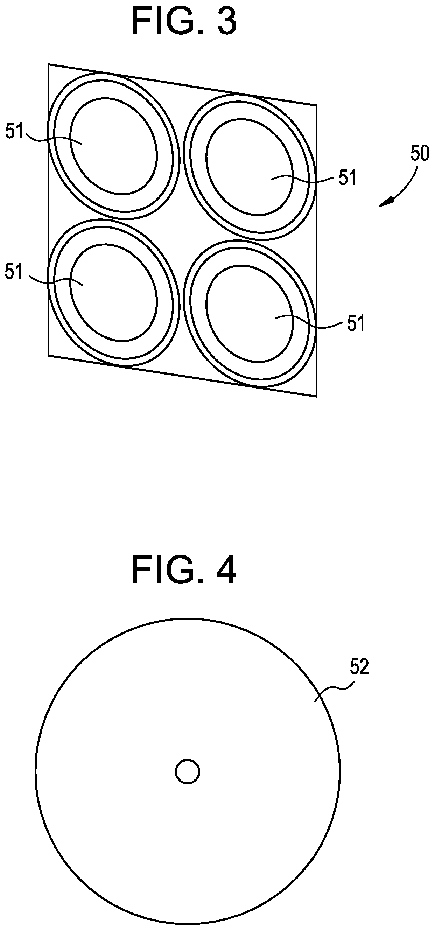

**Fig. 3** schematically depicts an antenna array **50** comprising a plurality of first seat system antennas **51,** suitable for use in some embodiments according to the present inventive subject matter.

**Fig. 4** schematically depicts a non-transitory computer-readable medium **52** in accordance with the present inventive subject matter.

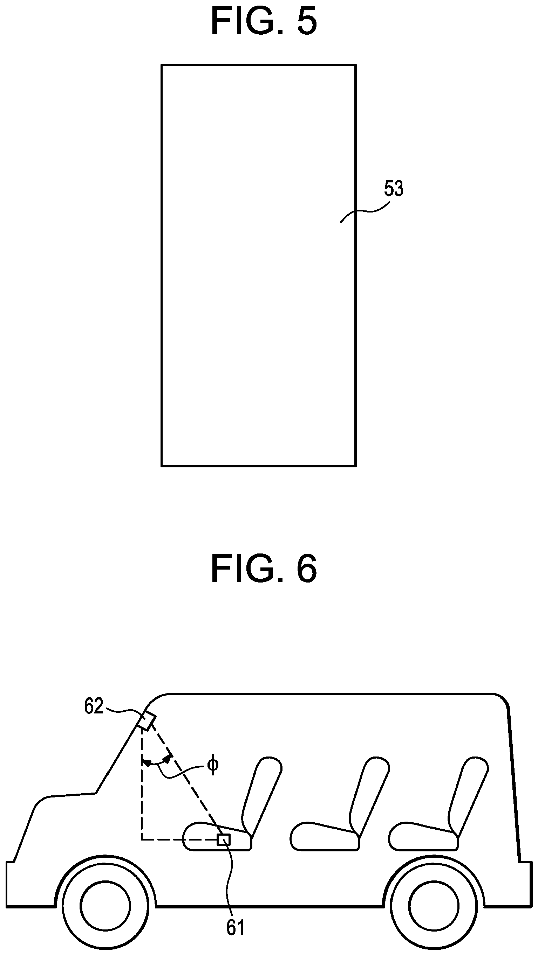

**Fig. 5** schematically depicts a processor **53** in accordance with the present inventive subject matter.

In embodiments disclosed above, conjectures as to distances between vehicle signal transmitters and seat antennas, and other conjectures (e.g., angle of arrival) are made based on signals emitted from vehicle signal transmitters and received by seat antennas. Systems and components can be provided, and methods can be carried out, in which such conjectures are made based on signals emitted from seat system wireless signal transmitters and received by antennas attached to a vehicle (e.g., vehicle antennas and/or vehicle transceivers can be employed).

As noted above, in some aspects, methods and systems according to the present inventive subject matter can employ and/or interface with existing technology, such as passive entry passive start (PEPS) systems and other technologies, including technologies that have yet to emerge (including some that may emerge imminently). In order to do so, components to be used as antennas, transmitters and/or transceivers can be selected so as to enable functions (e.g., some or all of the functions carried out by such components) to be carried out using such technologies (in some cases already installed in vehicles), and/or components already in vehicles can be used to carry out functions required in carrying out aspects of the present inventive subject matter, and/or components to be used in vehicles can be used to perform functions required in carrying out aspects of the present inventive subject matter as well as other functions.

Information and/or conjectures generated in accordance with the present inventive subject matter (and/or such information and/or conjectures in combination with information and/or conjectures made from other components and/or systems) can be used to affect or control other functions carried out by the vehicle (or any component of the vehicle), e.g., if a seat is in a location that does not correspond to a receptacle, the driver can be alerted, the vehicle can be prevented from starting, etc., as desired.

The description above contains references to "time-of-flight" (e.g., "conjecturing as to a distance between the first vehicle wireless signal transmitter and the first seat system antenna is done by detecting the time-of-flight of said at least one wireless signal transmitted from the first vehicle wireless signal transmitter and received by the first seat system antenna"). Persons of skill in the art are familiar with, and are readily able to make, time-of-flight calculations (and are readily able to make systems that perform such calculations).

The description above also contains references to multilateration (e.g., "performing 3-D true range multilateration using the conjectured distance between the first vehicle wireless signal transmitter and the first seat system antenna, the conjectured distance between the second vehicle wireless signal transmitter and the first seat system antenna, and the conjectured distance between the third vehicle wireless signal transmitter and the first seat system antenna"). Persons of skill in the art are familiar with, and are readily able to make, multilateration calculations (and are readily able to make systems that perform such calculations).

In some embodiments in accordance with the present inventive subject matter, there is a unique distance from a first vehicle wireless signal transmitter to a seat system antenna for each possible combination of changeable seat attributes (including position) for any seat system. Accordingly, based on the conjectured distance between the first vehicle wireless signal transmitter and a seat system antenna, there is only a single possible combination of changeable seat attributes (including position), and so by knowing the conjectured distance between the first vehicle wireless signal transmitter and the seat system antenna, a conjecture can be made as to the seat receptacle with which the seat system is engaged (and a conjecture can be made as to each of the other selections for the changeable seat attributes for the seat system). Therefore, in such embodiments, it is possible to make conjectures with only a single vehicle wireless signal transmitter.

In some embodiments in accordance with the present inventive subject matter, for each combination of changeable seat attributes (other than position), there is a unique distance from a first vehicle wireless signal transmitter to a seat system antenna for each possible position for a seat system. Accordingly, based on the selection(s) for all changeable seat attributes (other than position) and a conjectured distance between the first vehicle wireless signal transmitter and a seat system antenna, there is only a single possible position. Accordingly, by knowing (a) the conjectured distance between the first vehicle wireless signal transmitter and the seat system antenna and (b) the selections for changeable seat attributes other than position, a conjecture can be made as to the seat receptacle with which the seat system is engaged. In other words, it is possible for a first seat system with a first combination of changeable seat attributes and a second seat system with a second combination of changeable seat attributes to be the same distance from a first vehicle wireless signal transmitter only if there is a difference between the respective combinations of seat attributes (in addition to position). In such a situation, by knowing the respective selections for seat attributes (other than position), e.g., by information provided by sensors, it is possible to determine the respective positions for each seat system. Therefore, in such embodiments, it is possible to make conjectures with only a single vehicle wireless signal transmitter.

The description above also contains references to calculations of "angle of arrival" of wireless signals (emitted from transmitters) toward antenna arrays (as well as using angle of approach with relative heights of transmitter and antenna array to determine distance between transmitter and antenna). Such calculations are disclosed in PCT Patent Application PCT/US19/43399, filed July 25, 2019 (PCT Publication No. WO 2020/028135), PCT Patent Application PCT/US19/43399 describes a location detector that comprises:
a phased array of at least a first antenna, a second antenna and a third antenna; and
a location calculation unit,
each of the first antenna, the second antenna and the third antenna configured to receive signals from signal emitters,
the location calculation unit configured to determine location information of a first signal emitter by comparing at least:
   a phase of a first portion of a wavefront of a first signal as received by the first antenna, the first signal emitted by the signal emitter,
   a phase of a second portion of the wavefront of the first signal as received by the second antenna, and
   a phase of a third portion of the wavefront of the first signal as received by the third antenna.

PCT Patent Application PCT/US19/43399 further describes comparing the phase of a first portion of a wavefront of a first signal received in a first antenna of an array, the phase of a second portion of the wavefront of the first signal received in a second antenna of the array, and the phase of a third portion of the wavefront of the first signal received in the third antenna of the array to determine an angle Φ defined by:
an imaginary line extending from the location detector to the signal emitter, and
an imaginary vertical line extending downward from the location detector.

**Fig. 6** depicts schematically a representative scenario in which an angle Φ is defined by an imaginary line extending from a vehicle wireless signal transmitter **62** to a seat system antenna **61,** and an imaginary vertical line extending downward from the vehicle wireless signal transmitter **62.**

PCT Patent Application PCT/US19/43399 further describes comparing the phase of the first portion of the wavefront of the first signal received in the first antenna, the phase of the second portion of the wavefront of the first signal received in the second antenna, and the phase of the third portion of the wavefront of the first signal received in the third antenna to determine an angle θ, the angle θ being an angle defined by:
an imaginary horizontal line extending from a point directly beneath the location detector to a signal emitter, and
an imaginary horizontal reference line extending through the point directly beneath the location detector (e.g., a line that bisects the right and left sides of the vehicle), the angle θ defining an angular location of the signal emitter relative to the location detector.

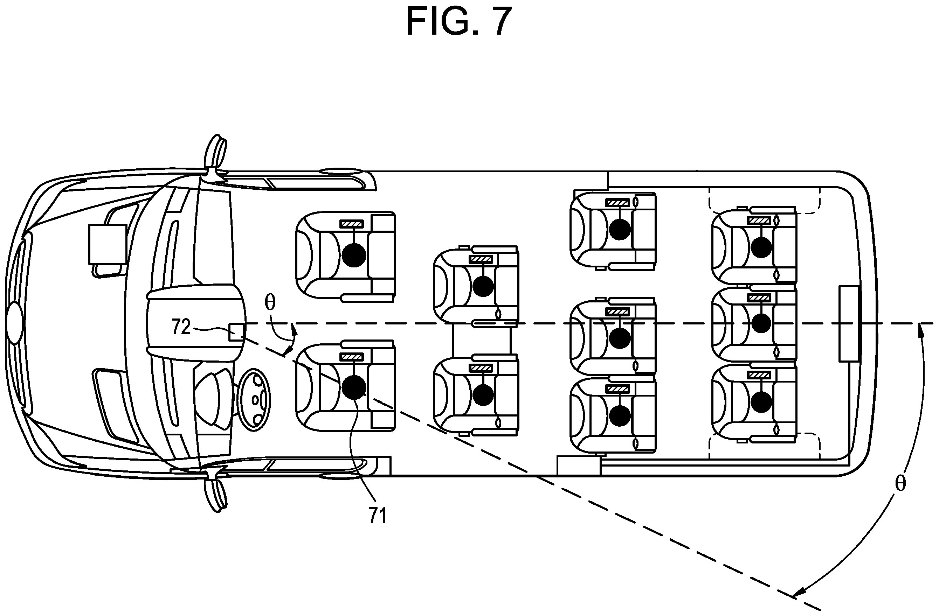

PCT Patent Application PCT/US19/43399 further describes determining a distance between the location detector and the signal emitter by calculating the value of (a height of the location detector relative to an estimated height of the signal emitter) / (cos θ). **Fig. 7** depicts schematically a representative scenario in which an angle θ defines an angular location of a seat system antenna **71** relative to a vehicle wireless signal transmitter **72.**

## Claims

1. A vehicle seat information detection system (20), comprising:
at least a first vehicle wireless signal transmitter (21), a second vehicle wireless signal transmitter (22) and a third vehicle wireless signal transmitter (23);
at least first and second seat receptacles (24, 25);
at least first and second vehicle seat systems (26, 27); and
a calculation element (29),
the first vehicle wireless signal transmitter (21) attached to a vehicle at a first location,
the second vehicle wireless signal transmitter (22) attached to the vehicle at a second location,
the third vehicle wireless signal transmitter (23) attached to the vehicle at a third location,
the first seat receptacle (24) attached to the vehicle at a fourth location,
the second seat receptacle (25) attached to the vehicle at a fifth location,
the first vehicle seat system (26) comprising a first seat (33), a first seat system antenna (39), a first seat system wireless signal transmitter (40), and at least one vehicle seat attribute sensor (37) that senses at least one seat attribute of the first vehicle seat system (26) that can be changeable between at least two possible selections, and where some selections of the seat attribute cause the first seat system antenna (39) to be in a location that differs from where the first seat system antenna (39) would be with a default selection for the seat attribute,
the second vehicle seat system (27) comprising a second seat (41), a second seat system antenna (47) and a second seat system wireless signal transmitter (48),
the first vehicle seat system (26) selectively engageable with at least the first seat receptacle (24) and the second seat receptacle (25),
the second vehicle seat system (27) selectively engageable with at least the first seat receptacle (24) and the second seat receptacle (25),
the calculation element (29) configured to conjecture as to which of the at least first and second seat receptacles (24, 25) the first vehicle seat system (26) is engaged, based on at least conjectures as to:
a distance between the first vehicle wireless signal transmitter (21) and the first seat system antenna (39), said conjecture as to the distance between the first vehicle wireless signal transmitter (21) and the first seat system antenna (29) being based on at least one wireless signal sent from the first vehicle wireless signal transmitter (21) and received by the first seat system antenna (39), and wherein in said conjecturing as to a distance between the first vehicle wireless signal transmitter and the first seat system antenna, a location adjustment is made based on the sensed seat attribute selection,
a distance between the second vehicle wireless signal transmitter (22) and the first seat system antenna (39), said conjecture as to the distance between the second vehicle wireless signal transmitter (22) and the first seat system antenna (39) being based on at least one wireless signal sent from the second vehicle wireless signal transmitter (22) and received by the first seat system antenna (29),
a distance between the third vehicle wireless signal transmitter (23) and the first seat system antenna (39), said conjecture as to the distance between the third vehicle wireless signal transmitter (23) and the first seat system antenna (39) being based on at least one wireless signal sent from the third vehicle wireless signal transmitter (23) and received by the first seat system antenna (39),
the calculation element (29) configured to conjecture as to which of the at least first and second seat receptacles (24, 25) the second vehicle seat system (27) is engaged, based on at least conjectures as to:
a distance between the first vehicle wireless signal transmitter (21) and the second seat system antenna (47), said conjecture as to the distance between the first vehicle wireless signal transmitter (21) and the second seat system antenna (47) being based on at least one wireless signal sent from the first vehicle wireless signal transmitter (21) and received by the second seat system antenna (47),
a distance between the second vehicle wireless signal transmitter (22) and the second seat system antenna (47), said conjecture as to the distance between the second vehicle wireless signal transmitter (22) and the second seat system antenna (47) being based on at least one wireless signal sent from the second vehicle wireless signal transmitter (22) and received by the second seat system antenna (47), and
a distance between the third vehicle wireless signal transmitter (23) and the second seat system antenna (47), said conjecture as to the distance between the third vehicle wireless signal transmitter (23) and the second seat system antenna (47) being based on at least one wireless signal sent from the third vehicle wireless signal transmitter (23) and received by the second seat system antenna (47).

2. A vehicle seat information detection system (20) as recited in claim 1, wherein:
the first vehicle seat system (26) further comprises at least a first signal-reception-strength detector (35),
said conjecture as to the distance between the first vehicle wireless signal transmitter (21) and the first seat system antenna (39) is based on a signal-reception-strength value, detected by the first signal-reception-strength detector (35), of at least one wireless signal emitted from the first vehicle wireless signal transmitter (21) and received by the first seat system antenna (39),
the second vehicle seat system (27) further comprises at least a second signal-reception-strength detector (43), and
said conjecture as to the distance between the first vehicle wireless signal transmitter (21) and the second seat system antenna (47) is based on a signal-reception-strength value, detected by the second signal-reception-strength detector (43), of at least one wireless signal emitted from the first vehicle wireless signal transmitter (21) and received by the second seat system antenna (47).

3. A vehicle seat information detection system (20) as recited in claim 1, wherein:
the calculation element (29) conjectures as to which of the at least first and second seat receptacles (24, 25) the first vehicle seat system (26) is engaged by [1] performing 3-D true range multilateration using the conjectured distance between the first vehicle wireless signal transmitter (21) and the first seat system antenna (39), the conjectured distance between the second vehicle wireless signal transmitter (22) and the first seat system antenna (39), and the conjectured distance between the third vehicle wireless signal transmitter (23) and the first seat system antenna (39), to conjecture as to the location of the first vehicle seat system (26), and [2] comparing the adjusted location of the first vehicle seat system (26) to stored locations corresponding to the first vehicle seat system (26) being engaged with the respective at least first and second seat receptacles (24, 25), and
the calculation element (29) conjectures as to which of the at least first and second seat receptacles (24, 25) the second vehicle seat system (27) is engaged by [1] performing 3-D true range multilateration using the conjectured distance between the first vehicle wireless signal transmitter (21) and the second seat system antenna (47), the conjectured distance between the second vehicle wireless signal transmitter (22) and the second seat system antenna (47), and the conjectured distance between the third vehicle wireless signal transmitter (23) and the second seat system antenna (47), to conjecture as to the location of the second vehicle seat system (27), and [2] comparing the conjectured location of the second vehicle seat system (27) to stored locations corresponding to the second vehicle seat system (27) being engaged with the respective at least first and second seat receptacles (24, 25).

4. A vehicle seat information detection system as recited in claim 1, wherein the at least one seat attribute is selected from among the group of attributes consisting of orientation, fold status, tumble status and recline.

5. A vehicle seat information detection system as recited in claim 1, wherein the first vehicle seat system further comprises at least a first seat sensor selected from among:
a seat occupancy sensor,
a seat belt sensor, and
a seat receptacle-engagement sensor.

6. A method of obtaining information regarding one or more vehicle seats, comprising:
transmitting from a first vehicle wireless signal transmitter (21) at least a first wireless signal, the first vehicle wireless signal transmitter (21) attached to a vehicle at a first location;
receiving, via a first seat system antenna (39), at least one wireless signal transmitted from the first vehicle wireless signal transmitter (21), the first seat system antenna (39) being part of a first vehicle seat system (26) comprising a first seat (33), the first seat system antenna (39), a first seat system wireless signal transmitter (40), and at least one vehicle seat attribute sensor (37) that senses at least one seat attribute of the first vehicle seat system (2) that can be changeable between at least two possible selections, and where some selections of the seat attribute cause the first seat system antenna (39) to be in a location that differs from where the first seat system antenna (39) would be with a default selection for the seat attribute;
conjecturing as to a distance between the first vehicle wireless signal transmitter (21) and the first seat system antenna (39) based on the at least one wireless signal transmitted from the first vehicle wireless signal transmitter (21) and received by the first seat system antenna (39), and wherein in said conjecturing as to a distance between the first vehicle wireless signal transmitter and the first seat system antenna, a location adjustment is made based on the sensed seat attribute selection; and
conjecturing as to whether the first vehicle seat system (26) is engaged with a first seat receptacle (24), based on at least said conjecture as to said distance between the first vehicle wireless signal transmitter (21) and the first seat system antenna (39), and based on known unique distances from the first vehicle wireless signal transmitter (21) to a seat system antenna for each combination of changeable seat attributes for each possible position for a seat system,
the first seat receptacle (24) attached to the vehicle at a fourth location, the first vehicle seat system (26) selectively engageable with at least the first seat receptacle (24).

7. A method as recited in claim 6, wherein the method further comprises:
receiving, via a second seat system antenna (47), at least one wireless signal transmitted from the first vehicle wireless signal transmitter (21),
the second seat system antenna (47) part of a second vehicle seat system (27) comprising a second seat (41), the second seat system antenna (47) and a second seat system wireless signal transmitter (48),
the second vehicle seat system (27) selectively engageable with at least the first seat receptacle (24) and the second seat receptacle (25);
conjecturing as to a distance between the first vehicle wireless signal transmitter (21) and the second seat system antenna (47) based on the at least one wireless signal transmitted from the first vehicle wireless signal transmitter (21) and received by the second seat system antenna (47); and
conjecturing as to which of at least said first and second seat receptacles (24, 25) the second vehicle seat system (27) is engaged, based on at least said conjecture as to said distance between the first vehicle wireless signal transmitter (21) and the second seat system antenna (47).

8. A method as recited in claim 6, wherein:
said first vehicle seat system (26) further comprises a first signal-reception-strength detector (35), and
said conjecturing as to a distance between the first vehicle wireless signal transmitter (21) and the first seat system antenna (39) is done based on a signal-reception-strength, detected by the first signal-reception-strength detector (35), of said at least one wireless signal transmitted from the first vehicle wireless signal transmitter (21) and received by the first seat system antenna (39).

9. A method as recited in claim 6, wherein said conjecturing as to a distance between the first vehicle wireless signal transmitter (21) and the first seat system antenna (39) is done by detecting the time of flight of said at least one wireless signal transmitted from the first vehicle wireless signal transmitter (21) and received by the first seat system antenna (39).

10. A method as recited in claim 6, wherein the at least one seat attribute is selected from among the group of attributes consisting of orientation, fold status, tumble status and recline.

11. A non-transitory computer-readable medium (52) having computer-executable commands, said computer-executable commands performing the steps of claim 6 when executed in a computer system.

12. A non-transitory computer-readable medium as recited in claim 11, wherein the at least one seat attribute is selected from among the group of attributes consisting of orientation, fold status, tumble status and recline.

13. A processor (53) on which is stored software having computer-executable commands, said computer-executable commands performing the steps of claim 6 when executed in a computer system

14. A processor as recited in claim 13, wherein the at least one seat attribute is selected from among the group of attributes consisting of orientation, fold status, tumble status and recline.

## Patentansprüche

1. Fahrzeugsitzinformationserkennungssystem (20), umfassend:
mindestens einen ersten Fahrzeugfunksignalsender (21), einen zweiten Fahrzeugfunksignalsender (22) und einen dritten Fahrzeugfunksignalsender (23);
mindestens eine erste und eine zweite Sitzaufnahme (24, 25);
mindestens ein erstes und ein zweites Fahrzeugsitzsystem (26, 27); und
ein Berechnungselement (29),
wobei der erste Fahrzeugfunksignalsender (21) an einem Fahrzeug an einer ersten Stelle angebracht ist,
wobei der zweite Fahrzeugfunksignalsender (22) an dem Fahrzeug an einer zweiten Stelle angebracht ist,
wobei der dritte Fahrzeugfunksignalsender (23) an dem Fahrzeug an einer dritten Stelle angebracht ist,
wobei die erste Sitzaufnahme (24) an dem Fahrzeug an einer vierten Stelle angebracht ist,
wobei die zweite Sitzaufnahme (25) an dem Fahrzeug an einer fünften Stelle angebracht ist,
wobei das erste Fahrzeugsitzsystem (26) einen ersten Sitz (33), eine Antenne (39) für das erste Sitzsystem und einen Funksignalsender (40) für das erste Sitzsystem und wenigstens einen Fahrzeugsitzeigenschaftssensor (37) umfasst, welcher wenigstens eine Sitzeigenschaft des ersten Fahrzeugsitzsystems (26) erfasst, welche zwischen wenigstens zwei Auswahlmöglichkeiten verändert werden kann, und wobei einige Auswahlmöglichkeiten der Sitzeigenschaft bewirken, dass die Antenne (39) für das erste Sitzsystem sich an einer Stelle befindet, die sich von der Stelle unterscheidet, an welcher die Antenne (39) für das erste Sitzsystem bei der Standardeinstellung der Sitzeigenschaft befinden würde,
wobei das zweite Fahrzeugsitzsystem (27) einen zweiten Sitz (41), eine Antenne (47) für das zweite Sitz-system und einen Funksignalsender (48) für das zweite Sitzsystem umfasst,
wobei das erste Fahrzeugsitzsystem (26) selektiv mit zumindest der ersten Sitzaufnahme (24) und der zweiten Sitzaufnahme (25) in Eingriff bringbar ist,
wobei das zweite Fahrzeugsitzsystem (27) selektiv mit zumindest der ersten Sitzaufnahme (24) und der zweiten Sitzaufnahme (25) in Eingriff bringbar ist,
wobei das Berechnungselement (29) dazu eingerichtet ist zu schätzen, mit welcher von der wenigstens ersten und zweiten Sitzaufnahme (24, 25) das erste Fahrzeugsitzsystem (26) im Eingriff ist, und zwar auf der Grundlage von zumindest Schätzungen über:
eine Distanz zwischen dem ersten Fahrzeugfunksignalsender (21) und der Antenne (39) für das erste Sitzsystem, wobei die Schätzung über die Distanz zwischen dem ersten Fahrzeugfunksignalsender (21) und der Antenne (39) für das erste Sitzsystem auf mindestens einem Funksignal basieren, das vom ersten Fahrzeugfunksignalsender (21) gesendet und von der Antenne (39) für das erste Sitzsystem empfangen wird, und wobei die Schätzung der Entfernung zwischen dem ersten Fahrzeugfunksignalsender und
der Antenne für das erste Sitzsystem eine Ortsanpassung auf der Grundlage der erfassten Sitzeigenschaftsauswahl vorgenommen wird,
eine Distanz zwischen dem zweiten Fahrzeugfunksignalsender (22) und der Antenne (39) für das erste Sitzsystem, wobei die Schätzung über die Distanz zwischen dem zweiten Fahrzeugfunksignalsender (22) und der Antenne (39) für das erste Sitzsystem auf mindestens einem Funksignal basiert, das von dem zweiten Fahrzeugfunksignalsender (22) gesendet und von der Antenne (39) für das erste Sitzsystem empfangen wird,
eine Distanz zwischen dem dritten Fahrzeugfunksignalsender (23) und der Antenne (39) für das erste Sitzsystem,
wobei die Schätzung über die Distanz zwischen dem dritten Fahrzeugfunksignalsender (23) und der Antenne (39) für das erste Sitzsystem auf mindestens einem Funksignal basiert, das von dem dritten Fahrzeugfunksignalsender (23) gesendet und von der Antenne (39) für das erste Sitzsystem empfangen wird,
wobei das Berechnungselement (29) dazu eingerichtet ist zu schätzen, mit welcher der mindestens ersten und zweiten Sitzaufnahme (24, 25) das zweite Fahrzeugsitzsystem (27) in Eingriff steht, und zwar auf der Grundlage von mindestens Schätzungen über:
eine Distanz zwischen dem ersten Fahrzeugfunksignalsender (21) und der Antenne (47) für das zweite Sitzsystem, wobei die Schätzung über die Distanz zwischen dem ersten Fahrzeugfunksignalsender (21) und der Antenne (47) für das zweite Sitzsystem auf mindestens einem Funksignal basiert, das von dem ersten Fahrzeugfunksignalsender (21) gesendet und von der Antenne (47) für das zweite Sitzsystem empfangen wird,
eine Distanz zwischen dem zweiten Fahrzeugfunksignalsender (22) und die Antenne (47) für das zweite Sitzsystem, wobei die Schätzung über die Entfernung zwischen dem zweiten Fahrzeugfunksignalsender (22) und der Antenne (47) für das zweite Sitzsystem auf mindestens einem Funksignal basiert, das von dem zweiten Fahrzeugfunksignalsender (22) gesendet und von der Antenne (47) für das zweite Sitzsystem empfangen wird, und
eine Distanz zwischen dem dritten Fahrzeugfunksignalsender (23) und der Antenne (47) für das zweite Sitzsystem, wobei die Schätzung bezüglich der Distanz zwischen dem dritten Fahrzeugfunksignalsender (23) und der Antenne (47) für das zweite Sitzsystem auf mindestens einem Funksignal basiert, das von dem dritten Fahrzeugfunksignalsender (23) gesendet und von der Antenne (47) für das zweite Sitzsystem empfangen wird.

2. Fahrzeugsitzinformationserkennungssystem (20) nach Anspruch 1, in welchem
das erste Fahrzeugsitzsystem (26) ferner mindestens einen ersten Signalempfangsstärkedetektor (35) umfasst,
die Schätzung der Entfernung zwischen dem ersten Fahrzeugfunksignalsender (21) und der Antenne (39) für das erste Sitzsystem auf einem vom ersten Signalempfangsstärkedetektor (35) erfassten Signalempfangsstärkewert von mindestens einem Funksignal basiert, das vom ersten Fahrzeugfunksignalsender (21) ausgesendet und von der Antenne (39) für das erste Sitzsystem empfangen wird,
das zweite Fahrzeugsitzsystem (27) ferner mindestens einen zweiten Signalempfangsstärkedetektor (43) umfasst, und
die Schätzung der Entfernung zwischen dem ersten Fahrzeugfunksignalsender (21) und der Antenne (47) für das zweite Sitzsystem auf einem vom zweiten Signalempfangsstärkedetektor (43) erfassten Signalempfangsstärkewert von mindestens einem Funksignal basiert, das vom ersten Fahrzeugfunksignalsender (21) ausgesendet und von der Antenne (47) für das zweite Sitzsystem empfangen wird.

3. Fahrzeugsitzinformationserkennungssystem (20) nach Anspruch 1, bei welchem:
das Berechnungselement (29) schätzt, in mit welcher der mindestens ersten und zweiten Sitzaufnahme (24, 25) das erste Fahrzeugsitzsystem im Eingriff ist, indem es [1] eine 3D-Echtbereichs-Multilateration unter Verwendung der geschätzten Entfernung zwischen dem ersten Fahrzeugfunksignalsender (21) und der Antenne (39)des ersten Sitzsystems, der geschätzten Entfernung zwischen dem zweiten Fahrzeugfunksignalsender (22) und der Antenne (39) des ersten Sitzsystems und der geschätzten Entfernung zwischen dem dritten Fahrzeugfunksignal-sender (23) und der Antenne (39) des ersten Sitzsystems durchführt, um den Standort des ersten Fahrzeugsitzsystems (26) zu schätzen, und [2] den geschätzten Standort des ersten Fahrzeugsitzsystems (26) mit gespeicherten Standorten vergleicht, die dem Eingreifen des ersten Fahrzeugsitzsystems (26) in die jeweilige mindestens erste und zweite Sitzaufnahme (24, 25) entsprechen, und
das Berechnungselement (29) schätzt, mit welcher der mindestens ersten und zweiten Sitzaufnahme (24, 25) das zweite Fahrzeugsitzsystem (27) in Eingriff ist, indem es [1] eine 3D-Echtbereichs-Multilateration unter Verwendung der geschätzten Entfernung zwischen dem ersten Fahrzeugfunksignalsender (21) und der Antenne (47) des zweiten Sitzsystems, zwischen dem zweiten Fahrzeugfunksignalsender (22) und der Antenne (47) des zweiten Sitzsystems und der geschätzten Entfernung zwischen dem dritten Fahrzeugfunksignalsender (23) und der Antenne (47) des zweiten Sitzsystems durchführt, um den Standort des zweiten Fahrzeugsitzsystems (27) zu schätzen, und [2] den geschätzten Standort des zweiten Fahrzeugsitzsystems (27) mit gespeicherten Standorten vergleicht, die dem Eingreifen des zweiten Fahrzeugsitz-systems (27) in die jeweilige zumindest ersten und zweiten Sitzaufnahme (24, 25) entsprechen.

4. Fahrzeugsitzinformationserkennungssystem nach Anspruch 1,
bei welchem die wenigstens eine Sitzeigenschaft aus der Gruppe von Eigenschaften ausgewählt wird, die aus Ausrichtung, Faltstatus, Kippstatus und Neigung besteht.

5. Fahrzeugsitzinformationserkennungssystem nach Anspruch 1,
bei welchem das erste Fahrzeugsitzsystem weiter mindestens einen ersten Sitzsensor umfasst, der ausgewählt aus:
einem Sitzbelegungssensor,
einem Sicherheitsgurtsensor, und einem Sitzaufnahme-Eingriffssensor.

6. Verfahren zum Erhalten von Informationen bezüglich eines oder mehrerer Fahrzeugsitze, umfassend:
Senden von mindestens einem ersten Funksignal von einem ersten Fahrzeugfunksignalsender (21), wobei der erste Fahrzeugfunksignalsender (21) an einem Fahrzeug an einer ersten Stelle angebracht ist;
Empfangen von mindestens einem Funksignal über eine Antenne (39) für das erste Sitzsystem, das von dem ersten Fahrzeugfunksignalsender (21) gesendet wird, wobei die Antenne (39) für das erste Sitzsystem Teil eines ersten Fahrzeugsitzsystems (26) ist, das einen ersten Sitz (33), die Antenne (39) für das erste Sitzsystem, einen Funksignalsender (40) des ersten Sitzsystems und wenigstens einen Fahrzeugsitzeigenschaftssensor (37) umfasst, welcher wenigstens eine Sitzeigenschaft des ersten Fahrzeugsitzsystems (26) erfasst, welche zwischen wenigstens zwei Auswahlmöglichkeiten verändert werden kann, und wobei einige Auswahlmöglichkeiten der Sitzeigenschaft bewirken, dass die Antenne (39) für das erste Sitzsystem sich an einer Stelle befindet, die sich von der Stelle unterscheidet, an welcher die Antenne (39) für das erste Sitzsystem bei der Standardeinstellung der Sitzeigenschaft befinden würde;
Schätzen einer Entfernung zwischen dem ersten Fahrzeugfunksignalsender (21) und der Antenne (39) für das erste Sitzsystem auf der Grundlage von dem mindestens einen Funksignal, das von dem ersten Fahrzeugfunksignalsender (21) gesendet und von der Antenne (39) für das erste Sitzsystem empfangen wird, und wobei die Schätzung der Entfernung zwischen dem ersten Fahrzeugfunksignalsender und der Antenne für das erste Sitzsystem eine Ortsanpassung auf der Grundlage der erfassten Sitzeigenschaftsauswahl vorgenommen wird; und
Schätzen, ob das erste Fahrzeugsitzsystem (26) mit einer ersten Sitzaufnahme (24) im Eingriff ist, auf der Grundlage von mindestens der Schätzung der Entfernung zwischen dem ersten Fahrzeugfunksignalsender (21) und der Antenne (39) für das erste Sitzsystem, und zwar auf der Grundlage bekannter eindeutiger Abstände vom ersten Fahrzeugfunksignalsender (21) zu einer Antenne eines Sitzsystems für jede Kombination von veränderlichen Sitzeigenschaften für jede mögliche Position eines Sitzsystems,
wobei die erste Sitzaufnahme (24) an dem Fahrzeug an einer vierten Stelle angebracht ist, wobei das erste Fahrzeugsitzsystem (26) selektiv mit mindestens der ersten Sitzaufnahme (24) verbunden werden kann.

7. Verfahren nach Anspruch 6,
wobei das Verfahren weiter folgendes umfasst:
Empfangen von mindestens einem Funksignal, das von dem ersten Fahrzeugfunksignalsender (22) gesendet wird, über eine Antenne (47) für das zweite Sitzsystem,
wobei die Antenne (47) für das zweite Sitzsystem Teil eines zweiten Fahrzeugsitzsystems (27) ist, welches einen zweiten Sitz (41), die Antenne (47) für das zweite Sitzsystem und einen Funksignalsender (48) des zweiten Sitzsystems umfasst,
wobei das zweite Fahrzeugsitzsystem (27) selektiv mit mindestens der ersten Sitzaufnahme (24) und der zweiten Sitzaufnahme (25) in Eingriff gebracht werden kann;
Schätzen einer Entfernung zwischen dem ersten Fahrzeugfunksignalsender (21) und der Antenne (47) für das zweite Sitzsystem basierend auf dem mindestens einen Funksignal, welches vom ersten Fahrzeugfunksignalsender (21) gesendet und von der Antenne (47) für das zweite Sitzsystem empfangen wird;
und
Schätzen, in welche der zumindest ersten und zweiten Sitzaufnahme (24, 25) das zweite Fahrzeugsitzsystem in Eingriff gebracht ist, und zwar zumindest auf der Grundlage der Schätzung der Entfernung zwischen dem ersten Fahrzeugfunksignalsender (21) und der Antenne (47) für das zweite Sitzsystem.

8. Verfahren nach Anspruch 6, bei welchem das erste Fahrzeugsitzsystem (26) ferner einen ersten Signalempfangsstärkedetektor (35) umfasst, und
die Schätzung der Entfernung zwischen dem ersten Fahrzeugfunksignalsender (21) und der Antenne (39) für das erste Sitzsystem auf der Grundlage einer von dem ersten Signalempfangsstärkedetektor (35) erfassten Signalempfangsstärke des mindestens einen Funksignals erfolgt, das von dem ersten Fahrzeugfunksignalsender (21) gesendet und von der Antenne (39) für das erste Sitz-system empfangen wird.

9. Verfahren nach Anspruch 6,
bei welchem das Schätzen der Entfernung zwischen dem ersten Fahrzeugfunksignalsender (21) und der Antenne (39) für das erste Sitzsystem durch Erfassen der Laufzeit des mindestens einen Funksignals erfolgt, das vom ersten Fahrzeugfunksignalsender (21) gesendet und von der Antenne (39) für das erste Sitzsystem empfangen wird.

10. Verfahren nach Anspruch 6,
bei welchem die wenigstens eine Sitzeigenschaft aus der Gruppe von Eigenschaften ausgewählt wird, die aus Ausrichtung, Faltstatus, Kippstatus und Neigung besteht.

11. Nichtflüchtiges computerlesbares Medium (52), welches auf einem Computer ausführbare Befehle aufweist, wobei die auf einem Computer ausführbaren Befehle die Schritte nach Anspruch 6 ausführen, wenn sie in einem Computersystem ausgeführt werden.

12. Nichtflüchtiges computerlesbares Medium nach Anspruch 11,
bei welchem wenigstens eine Sitzeigenschaft aus der Gruppe von Eigenschaften ausgewählt ist, die aus Ausrichtung, Faltstatus, Kippstatus und Neigung besteht.

13. Prozessor (53), auf dem Software mit
computerausführbaren Befehlen gespeichert ist, welche die Schritte von Anspruch 6 ausführen, wenn sie in einem Computersystem aufgeführt werden.

14. Prozessor nach Anspruch 13,
bei welchem wenigstens eine Sitzeigenschaft aus der Gruppe von Eigenschaften ausgewählt ist, die aus Ausrichtung, Faltstatus, Kippstatus und Neigung besteht.

## Revendications

1. - Système de détection d'informations de siège de véhicule (20), comprenant :
au moins un premier émetteur de signal sans fil de véhicule (21), un deuxième émetteur de signal sans fil de véhicule (22) et un troisième émetteur de signal sans fil de véhicule (23) ;
au moins des premier et second réceptacles de siège (24,25) ;
au moins des premier et second systèmes de siège de véhicule (26,27) ; et
un élément de calcul (29),
le premier émetteur de signal sans fil de véhicule (21) étant fixé à un véhicule à un premier emplacement,
le deuxième émetteur de signal sans fil de véhicule (22) étant fixé au véhicule à un deuxième emplacement,
le troisième émetteur de signal sans fil de véhicule (23) étant fixé au véhicule à un troisième emplacement,
le premier réceptacle de siège (24) étant fixé au véhicule à un quatrième emplacement,
le second réceptacle de siège (25) étant fixé au véhicule à un cinquième emplacement,
le premier système de siège de véhicule (26) comprenant un premier siège (33), une antenne de premier système de siège (39), un émetteur de signal sans fil de premier système de siège (40) et au moins un capteur d'attribut de siège de véhicule (37) qui détecte au moins un attribut de siège du premier système de siège de véhicule (26) qui est modifiable entre au moins deux sélections possibles, et où certaines sélections de l'attribut de siège amènent l'antenne de premier système de siège (39) à être à un emplacement qui diffère de l'endroit où l'antenne de premier système de siège (39) serait avec une sélection par défaut pour l'attribut de siège,
le second système de siège de véhicule (27) comprenant un second siège (41), une antenne de second système de siège (47) et un émetteur de signal sans fil de second système de siège (48),
le premier système de siège de véhicule (26) étant sélectivement apte à être en prise avec au moins le premier réceptacle de siège (24) et le second réceptacle de siège (25),
le second système de siège de véhicule (27) étant sélectivement apte à être en prise avec au moins le premier réceptacle de siège (24) et le second réceptacle de siège (25),
l'élément de calcul (29) étant configuré pour conjecturer avec lequel des au moins premier et second réceptacles de siège (24, 25) le premier système de siège de véhicule (26) est en prise, sur la base au moins de conjectures quant à :
une distance entre le premier émetteur de signal sans fil de véhicule (21) et l'antenne de premier système de siège (39), ladite conjecture quant à la distance entre le premier émetteur de signal sans fil de véhicule (21) et l'antenne de premier système de siège (29) étant basée sur au moins un signal sans fil envoyé par le premier émetteur de signal sans fil de véhicule (21) et reçu par l'antenne de premier système de siège (39), et où, dans ladite conjecture quant à une distance entre le premier émetteur de signal sans fil de véhicule et l'antenne de premier système de siège, un ajustement d'emplacement est effectué sur la base de la sélection d'attribut de siège détectée,
une distance entre le deuxième émetteur de signal sans fil de véhicule (22) et l'antenne de premier système de siège (39), ladite conjecture quant à la distance entre le deuxième émetteur de signal sans fil de véhicule (22) et l'antenne de premier système de siège (39) étant basée sur au moins un signal sans fil envoyé par le deuxième émetteur de signal sans fil de véhicule (22) et reçu par l'antenne de premier système de siège (29),
une distance entre le troisième émetteur de signal sans fil de véhicule (23) et l'antenne de premier système de siège (39), ladite conjecture quant à la distance entre le troisième émetteur de signal sans fil de véhicule (23) et l'antenne de premier système de siège (39) étant basée sur au moins un signal sans fil envoyé par le troisième émetteur de signal sans fil de véhicule (23) et reçu par l'antenne de premier système de siège (39),
l'élément de calcul (29) étant configuré pour conjecturer avec lequel des au moins premier et second réceptacles de siège (24, 25) le second système de siège de véhicule (27) est en prise, sur la base au moins de conjectures quant à :
une distance entre le premier émetteur de signal sans fil de véhicule (21) et l'antenne de second système de siège (47), ladite conjecture quant à la distance entre le premier émetteur de signal sans fil de véhicule (21) et l'antenne de second système de siège (47) étant basée sur au moins un signal sans fil envoyé par le premier émetteur de signal sans fil de véhicule (21) et reçu par l'antenne de second système de siège (47),
une distance entre le deuxième émetteur de signal sans fil de véhicule (22) et l'antenne de second système de siège (47), ladite conjecture quant à la distance entre le deuxième émetteur de signal sans fil de véhicule (22) et l'antenne de second système de siège (47) étant basée sur au moins un signal sans fil envoyé par le deuxième émetteur de signal sans fil de véhicule (22) et reçu par l'antenne de second système de siège (47), et
une distance entre le troisième émetteur de signal sans fil de véhicule (23) et l'antenne de second système de siège (47), ladite conjecture quant à la distance entre le troisième émetteur de signal sans fil de véhicule (23) et l'antenne de second système de siège (47) étant basée sur au moins un signal sans fil envoyé par le troisième émetteur de signal sans fil de véhicule (23) et reçu par l'antenne de second système de siège (47).

2. - Système de détection d'informations de siège de véhicule (20) selon la revendication 1, dans lequel :
le premier système de siège de véhicule (26) comprend en outre au moins un premier détecteur de puissance de réception de signal (35),
ladite conjecture quant à la distance entre le premier émetteur de signal sans fil de véhicule (21) et l'antenne de premier système de siège (39) est basée sur une valeur de puissance de réception de signal, détectée par le premier détecteur de puissance de réception de signal (35), d'au moins un signal sans fil émis par le premier émetteur de signal sans fil de véhicule (21) et reçu par l'antenne de premier système de siège (39),
le second système de siège de véhicule (27) comprend en outre au moins un second détecteur de puissance de réception de signal (43), et
ladite conjecture quant à la distance entre le premier émetteur de signal sans fil de véhicule (21) et l'antenne de second système de siège (47) est basée sur une valeur de puissance de réception de signal, détectée par le second détecteur de puissance de réception de signal (43), d'au moins un signal sans fil émis par le premier émetteur de signal sans fil de véhicule (21) et reçu par l'antenne de second système de siège (47).

3. - Système de détection d'informations de siège de véhicule (20) selon la revendication 1, dans lequel :
l'élément de calcul (29) conjecture avec lequel des au moins premier et second réceptacles de siège (24, 25) le premier système de siège de véhicule (26) est en prise en [1] effectuant une multilatération à portée réelle 3D à l'aide de la distance conjecturée entre le premier émetteur de signal sans fil de véhicule (21) et l'antenne de premier système de siège (39), de la distance conjecturée entre le deuxième émetteur de signal sans fil de véhicule (22) et l'antenne de premier système de siège (39), et de la distance conjecturée entre le troisième émetteur de signal sans fil de véhicule (23) et l'antenne de premier système de siège (39), pour conjecturer quant à l'emplacement du premier système de siège de véhicule (26), et en [2] comparant l'emplacement ajusté du premier système de siège de véhicule (26) à des emplacements stockés correspondant au premier système de siège de véhicule (26) en prise avec les au moins premier et second réceptacles de siège (24, 25) respectifs, et
l'élément de calcul (29) conjecture avec lequel des au moins premier et second réceptacles de siège (24, 25) le second système de siège de véhicule (27) est en prise en [1] effectuant une multilatération à portée réelle 3D à l'aide de la distance conjecturée entre le premier émetteur de signal sans fil de véhicule (21) et l'antenne de second système de siège (47), de la distance conjecturée entre le deuxième émetteur de signal sans fil de véhicule (22) et l'antenne de second système de siège (47), et de la distance conjecturée entre le troisième émetteur de signal sans fil de véhicule (23) et l'antenne de second système de siège (47), pour conjecturer quant à l'emplacement du second système de siège de véhicule (27), et en [2] comparant l'emplacement conjecturé du second système de siège de véhicule (27) à des emplacements stockés correspondant au second système de siège de véhicule (27) en prise avec les au moins premier et second réceptacles de siège (24, 25) respectifs.

4. - Système de détection d'informations de siège de véhicule selon la revendication 1, dans lequel l'au moins un attribut de siège est sélectionné parmi le groupe d'attributs consistant en une orientation, un état de pliage, un état de culbutage et une inclinaison.

5. - Système de détection d'informations de siège de véhicule selon la revendication 1, dans lequel le premier système de siège de véhicule comprend en outre au moins un premier capteur de siège sélectionné parmi :
un capteur d'occupation de siège,
un capteur de ceinture de sécurité, et
un capteur de prise avec un réceptacle de siège.

6. - Procédé d'obtention d'informations concernant un ou plusieurs sièges de véhicule, comprenant :
transmettre, à partir d'un premier émetteur de signal sans fil de véhicule (21), au moins un premier signal sans fil, le premier émetteur de signal sans fil de véhicule (21) étant fixé à un véhicule à un premier emplacement ;
recevoir, par l'intermédiaire d'une antenne de premier système de siège (39), au moins un signal sans fil transmis par le premier émetteur de signal sans fil de véhicule (21), l'antenne de premier système de siège (39) faisant partie d'un premier système de siège de véhicule (26) comprenant un premier siège (33), l'antenne de premier système de siège (39), un émetteur de signal sans fil de premier système de siège (40) et au moins un capteur d'attribut de siège de véhicule (37) qui détecte au moins un attribut de siège du premier système de siège de véhicule (26) qui est modifiable entre au moins deux sélections possibles, et où certaines sélections de l'attribut de siège amènent l'antenne de premier système de siège (39) à être à un emplacement qui diffère de l'endroit où l'antenne de premier système de siège (39) serait avec une sélection par défaut pour l'attribut de siège ;
conjecturer quant à une distance entre le premier émetteur de signal sans fil de véhicule (21) et l'antenne de premier système de siège (39) sur la base de l'au moins un signal sans fil transmis par le premier émetteur de signal sans fil de véhicule (21) et reçu par l'antenne de premier système de siège (39), et où, dans ladite conjecture quant à une distance entre le premier émetteur de signal sans fil de véhicule et l'antenne de premier système de siège, un ajustement d'emplacement est effectué sur la base de la sélection d'attribut de siège détectée ; et
conjecturer quant au point de savoir si le premier système de siège de véhicule (26) est en prise avec un premier réceptacle de siège (24), sur la base au moins de ladite conjecture quant à ladite distance entre le premier émetteur de signal sans fil de véhicule (21) et l'antenne de premier système de siège (39), et sur la base de distances uniques connues du premier émetteur de signal sans fil de véhicule (21) à une antenne de système de siège pour chaque combinaison d'attributs de siège modifiables pour chaque position possible pour un système de siège,
le premier réceptacle de siège (24) étant fixé au véhicule à un quatrième emplacement, le premier système de siège de véhicule (26) étant sélectivement apte à être en prise avec au moins le premier réceptacle de siège (24).

7. - Procédé selon la revendication 6, dans lequel le procédé comprend en outre :
recevoir, par l'intermédiaire d'une antenne de second système de siège (47), au moins un signal sans fil transmis par le premier émetteur de signal sans fil de véhicule (21),
l'antenne de second système de siège (47) faisant partie d'un second système de siège de véhicule (27) comprenant un second siège (41), l'antenne de second système de siège (47) et un émetteur de signal sans fil de second système de siège (48),
le second système de siège de véhicule (27) étant sélectivement apte à être en prise avec au moins le premier réceptacle de siège (24) et le second réceptacle de siège (25) ;
conjecturer quant à une distance entre le premier émetteur de signal sans fil de véhicule (21) et l'antenne de second système de siège (47) sur la base de l'au moins un signal sans fil transmis par le premier émetteur de signal sans fil de véhicule (21) et reçu par l'antenne de second système de siège (47) ; et
conjecturer avec lequel d'au moins lesdits premier et second réceptacles de siège (24, 25) le second système de siège de véhicule (27) est en prise, sur la base au moins de ladite conjecture quant à ladite distance entre le premier émetteur de signal sans fil de véhicule (21) et l'antenne de second système de siège (47).

8. - Procédé selon la revendication 6, dans lequel :
ledit premier système de siège de véhicule (26) comprend en outre un premier détecteur de puissance de réception de signal, et
ladite conjecture quant à une distance entre le premier émetteur de signal sans fil de véhicule (21) et l'antenne de premier système de siège (39) est effectuée sur la base d'une puissance de réception de signal, détectée par le premier détecteur de puissance de réception de signal (35), dudit au moins un signal sans fil transmis par le premier émetteur de signal sans fil de véhicule (21) et reçu par l'antenne de premier système de siège (39).

9. - Procédé selon la revendication 6, dans lequel ladite conjecture quant à une distance entre le premier émetteur de signal sans fil de véhicule (21) et l'antenne de premier système de siège (39) est effectuée en détectant le temps de vol dudit au moins un signal sans fil transmis par le premier émetteur de signal sans fil de véhicule (21) et reçu par l'antenne de premier système de siège (39).

10. - Procédé selon la revendication 6, dans lequel l'au moins un attribut de siège est sélectionné parmi le groupe d'attributs consistant en une orientation, un état de pliage, un état de culbutage et une inclinaison.

11. - Support lisible par ordinateur non-transitoire (52) ayant des instructions exécutables par ordinateur, lesdites instructions exécutables par ordinateur effectuant les étapes de la revendication 6 lorsqu'elles sont exécutées dans un système informatique.

12. - Support lisible par ordinateur non-transitoire selon la revendication 11, dans lequel l'au moins un attribut de siège est sélectionné parmi le groupe d'attributs consistant en une orientation, un état de pliage, un état de culbutage et une inclinaison.

13. - Processeur (53) sur lequel est stocké un logiciel ayant des instructions exécutables par ordinateur, lesdites instructions exécutables par ordinateur effectuant les étapes de la revendication 6 lorsqu'elles sont exécutées dans un système informatique.

14. - Processeur selon la revendication 13, dans lequel l'au moins un attribut de siège est sélectionné parmi le groupe d'attributs consistant en une orientation, un état de pliage, un état de culbutage et une inclinaison.
